# EUROPEAN PATENT APPLICATION

(11) **EP 3 736 128 A1**
(43) Date of publication of application: **11.11.2020**
(21) Application number: 20178603.5
(22) Date of filing: 31.07.2015
(51) Int. Cl.: B32B 7/12, B32B 15/088, B32B 21/08, B32B 27/08, B32B 27/10, B32B 27/28, B32B 27/30, B32B 27/32, B32B 27/34, B32B 27/40

(54) **POLYMER BLEND COMPOSITIONS COMPRISING FURAN-BASED POLYAMIDES**

(30) Priority: 31.07.2014 US 201462031339 P; 31.07.2014 US 201462031357 P
(62) Divisional of application: 15760318.4
(71) Applicant: DuPont Industrial Biosciences USA, LLC, Wilmington, Delaware 19805 (US)
(72) Inventor: DUNCAN, Andrew Jay, Wilmington, New Jersey 19803 (US); LIAO, Ken-Hsuan, Hockessin, Delaware 19707 (US); MAGENAU, Andrew J.D., Princeton, New Jersey 08543 (US); NEDERBERG, Fredrik, Hovas (SE); TORRADAS, Jose Maria, West Chester, Pennsylvania 19382 (US)
(74) Representative: Mewburn Ellis LLP

(57) **Abstract**

The present invention describes polymer blend compositions comprising furan-based polyamides, as well as use of such polymer blend compositions as barriers to gas permeation.

## Description

### CROSS-REFERENCE TO RELATED APPLICATION

This application claims the benefit of U.S. Provisional Application Nos. 62/031,339 and 62/031,357 filed on July 31, 2014, which are incorporated herein by reference in their entirety.

### FIELD OF THE DISCLOSURE

This disclosure relates in general to the furan-based polyamides and compositions comprising polymer blends of furan-based polyamides, and in particular to polymeric gas permeation barrier layers comprising a furan-based polyamide and articles made therefrom and methods of improving the shelf life of products.

### BACKGROUND

Gas barrier properties are one of the key requirements for polymers used in packaging applications to protect the contents and provide desired shelf-life. The prevention of oxygen permeation, for example inhibits oxidation and microbial growth, whereas prevention of water vapor permeation retains liquid content or protects the contents against water degradation (mold). Many polymers have emerged for these applications such as poly(ethylene terephthalate) (PET), polyethylene (PE), poly(vinyl alcohol) (PVOH), poly(ethylene vinyl alcohol) (EvOH), poly(acrylonitrile) (PAN), poly(ethylene naphthalene) (PEN), polyamide derived from adipic acid and *meta*-xylenediamine (MXD6) and poly(vinylidene chloride) (PVdC), and may include additives to enhance barrier properties. However, most of these polymers suffer from various drawbacks. For example, high density polyethylene (HDPE) and low density polyethylene (LDPE) have excellent water vapor barrier, but poor oxygen barrier. EvOH exhibits good oxygen barrier at low humidity levels but fails at room temperature and high levels of humidity or under retort conditions (retort shock). PET has relatively high tensile strength but is limited by modest water and oxygen barrier properties. PVOH cannot be extruded as it is thermally unstable below its melting point. PVDC while being an excellent gas/water barrier resin has environmental limitations. Aliphatic polyamides (e.g. PA 6 or 6,66) have moderate gas barrier performance and like PET have poor water barrier.

Hence, there is a need for new compositions comprising furan-based polyamides.

### SUMMARY OF THE DISCLOSURE

In a first embodiment, there is a multilayer structure comprising:
a) a first layer selected from the group consisting of polymers, composites, metals, alloys, glass, silicon, ceramics, wood, and paper; and
b) a furan-based polyamide layer disposed on at least a portion of the first layer, wherein the furan-based polyamide is derived from:
   i. one or more dicarboxylic acids or derivatives thereof selected from the group consisting of an aliphatic diacid, an aromatic diacid and an alkylaromatic diacid, wherein at least one of the dicarboxylic acid is furan dicarboxylic acid or a derivative thereof, and
   ii.one or more diamines selected from the group consisting an aliphatic diamine, an aromatic diamine and an alkylaromatic diamine, and
wherein the furan-based polyamide layer provides a substantial barrier to gas permeation.

In a second embodiment of the multilayer structure, the first layer is selected from the group consisting of polyurethane, polyester, polyolefin, polyamide, polyimide, polycarbonate, polyether, polyacrylates, styrenics, fluoropolymer, polyvinylchlorides, epoxies, EVOH and polysiloxanes.

In a third embodiment of the multilayer structure, the furan-based polyamide comprises the following repeat unit: 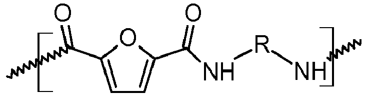 wherein R is selected from the group consisting of an alkyl, an aromatic and an alkylaromatic group.

In a fourth embodiment, R is a C2-C18 hydrocarbon or fluorocarbon group

In a fifth embodiment of the multilayer structure, the furan-based polyamide layer comprises a polymer blend of the furan-based polyamide and a polymer selected from the group consisting of polyurethanes, polyesters, polyolefins, polyamides, polyimides, polycarbonates, polyethers, polyacrylates, styrenics, fluoropolymers, polysiloxanes, EVOH, and mixtures thereof,
wherein the furan-based polyamide is present in an amount in the range of 0.1-99.9% by weight, based on the total weight of the polymer blend.

In a sixth embodiment of the multilayer structure, the furan-based polyamide layer comprises a polymer blend comprising poly(trimethylene furandicarbonamide) (3AF) and a second furan-based polyamide different from 3AF, and
wherein the amount of 3AF is 0.1-99.9% by weight, based on the total weight of the polymer blend.

In a seventh embodiment, the multilayer structure further comprises a second layer disposed on at least a portion of the furan-based polyamide layer, such that at least a portion of the furan-based polyamide layer is sandwiched between the first tie layer and the second layer.

In an eighth embodiment of the multilayer structure, the furan-based polyamide is derived from:
a) two or more diacids or derivatives thereof selected from the group consisting of an aliphatic diacid, an aromatic diacid and an alkylaromatic diacid, wherein the two or more diacids comprises at least 50.1 mol% of furan dicarboxylic acid or a derivative thereof, based on the total amount of the diacids or derivatives thereof; and
b) one or more diamines selected from the group consisting of an aliphatic diamine, an aromatic diamine and an alkylaromatic diamine.

In a ninth embodiment of the multilayer structure, there is an article comprising the multilayer structure, wherein the article is a film, a sheet, a coating, shaped or modeled article, a layer in a multilayer laminate, filaments, fibers, spun yarn, woven fabric, garment, or non-woven web, and wherein the multilayer structure provides gas permeation barrier to a product.

In a tenth embodiment of the multilayer structure, the product is at least one of an oxygen-sensitive product, a moisture-sensitive product, or a carbonated beverage.

In an eleventh embodiment, there is a gas impermeable structure comprising two or more layers, wherein at least one of the layers is a gas permeation barrier layer comprising a furan-based polyamide comprises the following repeat unit: 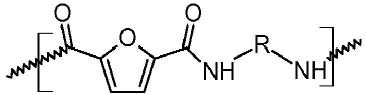 wherein R is selected from the group consisting of an alkyl, an aromatic and an alkylaromatic group.

In a twelfth embodiment, there is a method of improving a shelf-life of a product comprising:
a) providing a gas-impermeable structure in a form of a housing provided with a port for introducing a product in an enclosure defined by the housing, wherein the gas-impermeable structure comprises one or more layers, wherein at least one of the layers comprises a furan-based polyamide, wherein the furan-based polyamide is derived from:
   i. one or more dicarboxylic acids or derivatives thereof selected from the group consisting of an aliphatic diacid, a cycloaliphatic diacid, an aromatic diacid, an arylaliphatic diacid and an alkylaromatic diacid, wherein at least one of the dicarboxylic acid is furan dicarboxylic acid or derivative thereof, and
   ii. one or more diamines selected from the group consisting an aliphatic diamine, an aromatic diamine and an alkylaromatic diamine; and
b) storing the product in the enclosure defined by the housing of the gas-impermeable structure, wherein the gas permeation barrier layer prevents permeation of gases thereby improving the shelf life of the product.

In a thirteenth embodiment, there is a composition comprising a polymer blend of a furan-based polyamide and a polymer selected from the group consisting of polyurethanes, polyesters, polyolefins, polyamides, polyimides, polycarbonates, polyethers, polyacrylates, styrenics, fluoropolymers, polysiloxanes, EVOH, and mixtures thereof, wherein the furan-based polyamide is derived from:
i. one or more dicarboxylic acids or derivatives thereof selected from the group consisting of an aliphatic diacid, an aromatic diacid and an alkylaromatic diacid, wherein at least one of the dicarboxylic acid or derivative thereof is furan dicarboxylic acid or derivative thereof, and
ii. one or more diamines selected from the group consisting of an aliphatic diamine, a cycloaliphatic diamine, an aromatic diamine, an arylaliphatic diamine and an alkylaromatic diamine,
wherein the furan-based polyamide is present in an amount in the range of 0.1-99.9% by weight, based on the total weight of the polymer blend.

In a fourteenth embodiment, the composition comprises the polymer blend of a furan-based polyamide and a second polyamide selected from the group consisting of nylon-6, nylon-11, nylon-12, nylon 6-6, nylon 6-10, nylon 6-11, nylon 6-12, nylon 6/66 copolymer, nylon 6/12/66 terpolymer, poly(*para*-phenylene terephthalamide), poly(*meta*-phenylene terephthalamide), poly(*meta*-xylene adipamide) (MXD6), and mixtures thereof,
wherein the furan-based polyamide is present in an amount in the range of 0.1-99.9% by weight, based on the total weight of the polymer blend.

In a fifteenth embodiment, the composition comprises the polymer blend of poly(trimethylene furandicarbonamide) (3AF) and a second furan-based polyamide different from 3AF, and
wherein the amount of 3AF is 0.1-99.9% by weight, based on the total weight of the polymer blend.

### BRIEF DESCRIPTION OF THE DRAWINGS

The present teachings are illustrated by way of example and not limited to the accompanying figures.
Figure 1 schematically illustrates a cross-sectional view of a portion of an exemplary multilayer structure comprising two layers, in accordance with the present teachings.
Figure 2 schematically illustrates a cross-sectional view of a portion of an exemplary multilayer structure comprising at least three layers, in accordance with the present teachings.
Figure 3 schematically illustrates a cross-sectional view of a portion of an exemplary multilayer structure comprising at least three layers in accordance with the present teachings.

### DETAILED DESCRIPTION

The disclosures of all patent and non-patent literature cited herein are hereby incorporated by reference in their entirety.

The terms "comprises," "comprising," "includes," "including," "has," "having" or any other variation thereof, as used herein are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present). The phrase "one or more" is intended to cover a non-exclusive inclusion. For example, one or more of A, B, and C implies any one of the following: A alone, B alone, C alone, a combination of A and B, a combination of B and C, a combination of A and C, or a combination of A, B, and C.

Also, use of "a" or "an" are employed to describe elements and described herein. This is done merely for convenience and to give a general sense of the scope of the invention. This description should be read to include one or at least one and the singular also includes the plural unless it is obvious that it is meant otherwise.

When a range of values is provided herein, it is intended to encompass the end-points of the range unless specifically stated otherwise. Numerical values used herein have the precision of the number of significant figures provided, following the standard protocol in chemistry for significant figures as outlined in ASTM E29-08 Section 6. For example, the number 40 is encompassed within a range from 35.0 to 44.9, whereas the number 40.0 is encompassed with a range from 39.50 to 40.49. When it is stated that a value is "greater than" or "less than" a number, that number is not intended to be encompassed. For example, a value "greater than 1" is not equal to 1, unless specifically stated otherwise.

The term "biologically-derived" as used herein is used interchangeably with "biobased" or "bio-derived" and refers to chemical compounds including monomers and polymers, that are obtained in whole or in any part, from any renewable resources including but not limited to plant, animal, marine materials or forestry materials. The "biobased content" of any such compound shall be understood as the percentage of a compound's carbon content determined to have been obtained or derived from such renewable resources.

The term "furandicarboxylic acid" as used herein is used interchangeably with furandicarboxylic acid; 2,5-furandicarboxylic acid; 2,4-furandicarboxylic acid; 3,4-furandicarboxylic acid; and 2,3-furandicarboxylic acid. As used herein, the 2,5-furandicarboxylic acid (FDCA), is also known as dehydromucic acid, and is an oxidized furan derivative, as shown below:

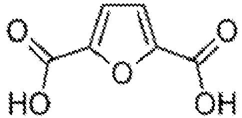

The term "dicarboxylic acid" as used herein is used interchangeably with "diacid".

The term "furan 2,5-dicarboxylic acid (FDCA) or a derivative thereof" as used herein is used interchangeably with "furan 2,5-dicarboxylic acid (FDCA) or a functional equivalent thereof" and refers to any suitable isomer of furandicarboxylic acid or derivative thereof such as, 2,5-furandicarboxylic acid; 2,4-furandicarboxylic acid; 3,4-furandicarboxylic acid; 2,3-furandicarboxylic acid or their derivatives.

In a derivative of 2,5-furan dicarboxylic acid, the hydrogens at the 3 and/or 4 position on the furan ring can, if desired, be replaced, independently of each other, with -CH₃, -C₂H₅, or a C₃ to C₂₅ straight-chain, branched or cyclic alkane group, optionally containing one to three heteroatoms selected from the group consisting of O, N, Si and S, and also optionally substituted with at least one member selected from the group consisting of -CI, -Br, -F, -I, -OH, -NH₂ and -SH. A derivative of 2,5-furan dicarboxylic acid can also be prepared by substitution of an ester or halide at the location of one or both of the acid moieties.

The term "barrier" as used herein is used interchangeably with "permeation rate" or "permeability rate" or "transmission rate" to describe the gas barrier properties, with low permeation rate or low transmission rate in a material implying that the material has a high barrier.

As used herein, the terms "barrier" and "barrier layer", as applied to multilayer structures, refer to the ability of a structure or layer to serve as a barrier to a fluid permeation (e.g. a gas or a liquid).

As used herein, oxygen barrier properties are measured according to ASTM D3985-05; carbon dioxide barrier properties are measured according to ASTM F2476-05; and moisture barrier properties are measured according to ASTM F1249-06.

The term "furan-based polyamide", as disclosed herein refers to any furan-based homo-polyamide or furan-based co-polyamide comprising at least one monomeric unit derived from furan dicarboxylic acid (FDCA) or a derivative thereof, such as FDME, FDC-CI or the like.

### Composition

Disclosed herein is a polymer blend composition comprising a polymer blend of a furan-based polyamide and a polymer selected from the group consisting of polyurethanes, polyesters, polyolefins, polyamides, polyimides, polycarbonates, polyethers, polyacrylates, styrenics, fluoropolymers, polysiloxanes, EVOH, and mixtures thereof.

In an embodiment, the furan-based polyamide is derived from:
i. one or more dicarboxylic acids or derivatives thereof selected from the group consisting of an aliphatic diacid, an aromatic diacid and an alkylaromatic diacid, wherein at least one of the dicarboxylic acid or derivative thereof is furan dicarboxylic acid or derivative thereof, and
ii. one or more diamines selected from the group consisting of an aliphatic diamine, a cycloaliphatic diamine, an aromatic diamine, an arylaliphatic diamine and an alkylaromatic diamine.

In one embodiment of the polymer blend composition, the furan-based polyamide is present in an amount in the range of 0.1-99.9% or 0.5-80% or 1-50% by weight, based on the total weight of the polymer blend.

In an embodiment, the polymer blend composition of the present disclosure provides barrier to gas permeation.

The furan-based polyamide can be derived from any suitable dicarboxylic acid such as a linear aliphatic diacid, a cycloaliphatic diacid, an aromatic diacid, an alkylaromatic diacid or mixtures thereof.

The aliphatic diacid may include from 2 to 18 carbon atoms in the main chain. Suitable aliphatic diacids include, but are not limited to, oxalic acid; fumaric acid; maleic acid; succinic acid; glutaric acid; adipic acid; pimelic acid; suberic acid; azelaic acid; sebacic acid; itaconic acid; malonic acid; mesaconic acid; dodecanediacid; undecanedioic acid; 1,12-dodecanedioic acid; 1,14-tetradecanedioic acid; 1,16-hexadecanedioic acid; 1,18-octadecanedioic acid; diabolic acid; and mixtures thereof. Suitable cycloaliphatic diacids include, but are not limited to, hexahydrophthalic acids, cis- and trans-1,4-cyclohexanedicarboxylic acid, cis- and trans-1,3-cyclohexanedicarboxylic acid, cis- and trans-1,2-cyclohexanedicarboxylic acid, tetrahydrophthalic acid, trans-1,2,3,6-tetrahydrophthalic acid, hexahydrophthalic anhydride, and dihydrodicyclopentadienedicarboxylic acid.

An aromatic diacid may include a single ring (e.g., phenyl), multiple rings (e.g., biphenyl), or multiple condensed rings in which at least one is aromatic, (e.g., 1,2,3,4-tetrahydronaphthyl, naphthyl, anthryl, or phenanthryl), which is optionally mono-, di-, or trisubstituted with, e.g., halogen, lower alkyl, lower alkoxy, lower alkylthio, trifluoromethyl, lower acyloxy, aryl , heteroaryl, and hydroxy. Suitable aromatic diacids include, but are not limited to, phthalic acid; isophthalic acid; p-(t-butyl)isophthalic acid; 1,2- or 1,3-phenylenediacetic acid; terephthalic acid; 2,5-dihydroxyterephthalic acid (DHTA); 4,4'-benzo-phenonedicarboxylic acid; 2,5 and 2,7-naphthalenedicarboxylic acid and mixtures thereof.

Suitable alkylaromatic diacids include, but are not limited to, 1,2- or 1,3-phenylenediacetic acids, trimellitylimidoglycine, and 1,3-bis(4-carboxyphenoxy)propane.

Examples of various hydroxy acids that can be included, in addition to the furan dicarboxylic acids, in the polymerization monomer makeup from which a copolymer can be made include glycolic acid, hydroxybutyric acid, hydroxycaproic acid, hydroxyvaleric acid, 7-hydroxyheptanoic acid, 8-hydroxycaproic acid, 9-hydroxynonanoic acid, or lactic acid; or those derived from pivalolactone, ε-caprolactone or L,L, D,D or D,L lactides.

Suitable esters of dicarboxylic acids described *supra* include, but are not limited to, methyl, ethyl, isopropyl, n-propyl, n-butyl, isobutyl, sec-butyl or tert-butyl esters, more preferably the methyl, ethyl or n-butyl esters. In an embodiment, diacids and their esters are obtained from renewable sources, such as azelaic acid, sebacic acid, succinic acid, and mixtures thereof.

In one embodiment, the furan-based polyamide is bio-derived or substantially bio-derived with the total content of bio-derived diacid in the range of 10-95% or 15-80% or 20-60% or 25-50% by moles with respect to the total molar content of the diacids and their esters in the polyamide.

Suitable aliphatic diacid halides include, but are not limited to butylene diacid chloride; butylene diacid bromide; hexamethylene diacid chloride; hexamethylene diacid bromide; octamethylene diacid chloride; octamethylene diacid bromide; decamethylene diacid chloride; decamethylene diacid bromide; dodecamethylene diacid chloride; dodecamethylene diacid bromide; and mixtures thereof.

Suitable aromatic diacid halide include, but are not limited to terephthaloyl dichloride; 4,4'-benzoyl dichloride; 2,6-naphthalenedicarboxyl acid dichloride; 1,5-naphthalene dicarboxyl acid dichloride; tolyl diacid chloride; tolylmethylene diacid bromide; isophorone diacid chloride; isophorone diacid bromide; 4,4'-methylenebis(phenyl acid chloride); 4,4'-methylenebis(phenyl acid bromide); 4,4'-methylenebis(cyclohexyl acid chloride); 4,4'-methylenebis(cyclohexyl acid bromide) and mixtures thereof.

The furan-based polyamide can be derived from any suitable diamine comonomer (H₂N-R-NH₂), where R (R¹ or R²) is a linear aliphatic, a cycloaliphatic, aromatic or an alkylaromatic group.

Any suitable aliphatic diamine comonomer (H₂N-R-NH₂), such as those with 2 to 12 number of carbon atoms in the main chain can be used. Suitable aliphatic diamines include, but are not limited to, 1,2-ethylenediamine; 1,6-hexamethylenediamine; 1,5-pentamethylenediamine; 1,4-tetramethylenediamine; 1,12-dodecanediamine; trimethylenediamine; 2-methyl pentamethylenediamine; heptamethylenediamine; 2-methyl hexamethylenediamine; 3-methyl hexamethylenediamine; 2,2-dimethyl pentamethylenediamine; octamethylenediamine; 2,5-dimethyl hexamethylenediamine; nonamethylenediamine; 2,2,4- and 2,4,4-trimethyl hexamethylenediamines; decamethylenediamine; 5-methylnonanediamine; undecamethylenediamine; dodecamethylenediamine; 2,2,7,7-tetramethyl octamethylenediamine; any C2-C16 aliphatic diamine optionally substituted with one or more C to C4 alkyl groups; and mixtures thereof.

Suitable cycloaliphatic diamines include, but are not limited to, bis(aminomethyl)cyclohexane; 1,4-bis(aminomethyl)cyclohexane; mixtures of 1,3- and 1,4-bis(aminomethyl)cyclohexane, 5-amino-1,3,3-trimethyl cyclohexanemethanamine; bis(p-aminocyclohexyl) methane, bis(aminomethyl)norbornane, 1,2-diaminocyclohexane, 1,4- or 1,3-diaminocyclohexane, 1,2-diaminocyclohexane, 1,4- or 1,3-diaminocyclohexane, , isomeric mixtures of bis(4-aminocyclohexyl)methane, and mixtures thereof.

Any suitable aromatic diamine comonomer (H₂N-M-NH₂), such as those with ring sizes between 6 and 10 can be used. Suitable aromatic diamines include, but are not limited to para-phenylenediamine; 3,3'-dimethylbenzidine; 2,6-naphthylenediamine; 1,5-diaminonaphthalene, 4,4'-diaminodiphenyl ether; 4,4'-diaminodiphenyl sulfone; sulfonic-para-phenylene-diamine, 2,6-diamonopyridine, naphthidine diamine, benzidine, o-tolidine, and mixtures thereof.

Suitable alkylaromatic diamines include, but are not limited to, 1,3-bis(aminomethyl)benzene, *meta*-xylylene diamine, *para*-xylylene diamine, 2,5-bis-aminoethyl-*para*-xylene, 9,9-bis(3-aminopropyl)fluorine, and mixtures thereof.

In an embodiment, at least one of the diamines is trimethylenediamine. In another embodiment, at least one of the diamine is tetramethylenediamine. In yet another embodiment, at least one of the diamine is decamethylenediamine.

In an embodiment, the furan-based polyamide is derived from a salt comprising diamine and a dicarboxylic acid, wherein the molar ratio of diamine and the dicarboxylic acid is 1:1. It is well known in the art that 1:1 diamine:diacid salts provide a means to control stoichiometry and to provide high molecular weight in step growth polymerizations such as that used to prepare polyamides.

The number average molecular weight of the furan-based polyamide is at least 5000 g/mol, or at least 10000 g/mol, or at least 20000 g/mol or higher.

The weight average molecular weight of the furan-based polyamide is at least 4 Kg/mol, or at least 40 Kg/mol, or at least 100 Kg/mol, or at least 150 Kg/mol, at least 200 Kg/mol.

In an embodiment, the furan-based polyamide is derived from two or more diacids comprising furan dicarboxylic acid and one or more diamines and comprises the following repeat units (1) and (2): 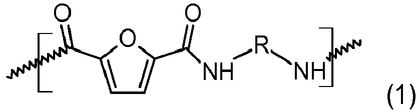 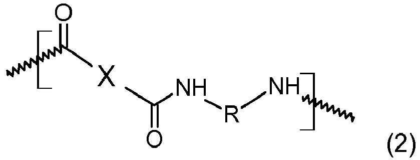 wherein X, R (= R¹ and R²) are independently selected from an alkyl, an aromatic or an alkylaromatic group.

In an embodiment R¹ and R² are same, i.e. R = R¹ = R². In another embodiment, R¹ and R² are different, i.e. R = R¹ and also R = R² such that R¹ ≠ R². In another embodiment, R = R¹, R² and R³.

In an embodiment, the repeat unit (1) is present in the range of 50.1-99.9 mol% or 55-98.5 mol% or 70-98.5 mol% or 85-98.5 mol% and the repeat unit (2) is present in the range of 0.1-49.9 mol% or 1.5-45 mol% or 1.50-30 mol% or 1.5-15 mol%, based on the total amount of furan-based polyamide composition.

The furan-based polyamides as disclosed hereinabove, comprising the repeat units (1) and (2), as shown above, are statistical copolyamides where the repeat unit (1) may be adjacent to itself or adjacent to the repeat unit (2) and similarly the repeat unit (2) may be adjacent to itself or adjacent to the repeat unit (1).

In an embodiment, the total degree of polymerization of the furan-based polyamides comprising the repeat units (1) and (2) is in the range of 20-2000 or 20-1000 or 20-450.

In an embodiment, the furan-based polyamide is derived from:
a) 50.1-99.9 mole% of furan dicarboxylic acid, based on the total amount of the diacid;
b) 0.1-49.9 mol% of terephthalic acid, based on the total amount of the diacid; and
   ids or derivatives thereof; and
c) one or more diamines selected from the group consisting of an aliphatic diamine, an aromatic diamine and an alkylaromatic diamine.

In an embodiment, the furan-based polyamide, is derived from furan dicarboxylic acid, terephthalic acid and one or more diamines, and comprises the following repeat units (1) and (3): 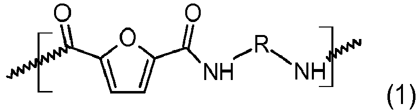 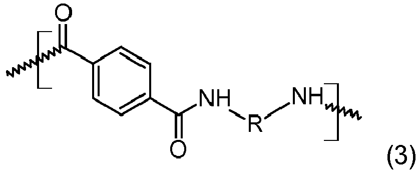 wherein R¹ and R² are independently selected from the group consisting of an aliphatic, an aromatic and an alkylaromatic group.

In an embodiment R¹ and R² are same. In another embodiment, R¹ and R² are different.

In an embodiment, the repeat unit (1) is present in the range of 50.1-99.9 mol% or 55-98.5 mol% or 70-98.5 mol% or 85-98.5 mol% and the repeat unit (3) is present in the range of 0.1-49.9 mol% or 1.5-45 mol% or 1.50-30 mol% or 1.5-15 mol%, based on the total amount of furan-based polyamide composition.

The furan-based polyamides derived from furan dicarboxylic acid and terephthalic acid as disclosed hereinabove, comprising the repeat units (1) and (3), as shown above, are statistical copolyamides where the repeat unit (1) may be adjacent to itself or adjacent to the repeat unit (3) and similarly the repeat unit (3) may be adjacent to itself or adjacent to the repeat unit (1).

In an embodiment, the total degree of polymerization of the furan-based polyamides comprising the repeat units (1) and (3) is in the range of 20-2000 or 20-1000 or 20-450.

In an embodiment, the one or more diamines comprises at least one of 1,3 propane diamine and hexamethylene diamine.

In an embodiment, the furan-based polyamide is derived from furan dicarboxylic acid, terephthalic acid, 1,3 propane diamine and hexamethylene diamine.

In an aspect, there is a polymer blend composition comprising a furan-based polyamide derived from:
(a) one or more diacids or derivatives thereof selected from the group consisting of an aliphatic diacid, an aromatic diacid and an alkylaromatic diacid,
   wherein the one or more diacids comprises at least 50.1 mol% of furan dicarboxylic acid or a derivative thereof, based on the total amount of the one or more diacids or derivatives thereof; and
(b) two or more diamines selected from the group consisting of an aliphatic diamine, an aromatic diamine and an alkylaromatic diamine.

Any suitable diacid and diamines as disclosed hereinabove may be used.

In an embodiment, the furan-based polyamide is derived from:
a) furan dicarboxylic acid;
b) 0.1-99.9 mol% of a first diamine, based on the total amount of diamine; and
c) 0.1-99.9 mol% of a second diamine different from the first diamine, based on the total amount of diamine,
   wherein the first diamine and the second ids or derivatives thereof; and
   one or more diamines selected from the group consisting of an aliphatic diamine, an aromatic diamine and an alkylaromatic diamine.

In an embodiment, the first diamine is 1,3 propane diamine and the second diamine is hexamethylene diamine.

In an aspect, there is a polymer blend composition comprising a furan-based polyamide derived from:
(a) at least one multifunctional acid or its derivative selected from the group consisting of triacids, tetracids and pentacids;
(b) one or more dicarboxylic acids or derivatives thereof, wherein the one or more dicarboxylic acids comprises at least 50.1 mol% of furan dicarboxylic acid or a derivative thereof, based on the total amount of the dicarboxylic acid and the multifunctional acid or their derivatives; and
(c) one or more diamines selected from the group consisting of an aliphatic diamine, an aromatic diamine and an alkylaromatic diamine.

Any suitable multifunctional acid may be used, including but not limited to, ethylenediaminetetraacetic acid, diethylenetriaminepentaacetic acid, trimesic acid, and mixtures thereof.

In an aspect, there is a polymer blend composition comprising a furan-based polyamide derived from:
(a) one or more dicarboxylic acids or derivatives thereof, wherein the one or more dicarboxylic acids comprises at least 50.1 mol% of furan dicarboxylic acid or a derivative thereof, based on the total amount of the one or more dicarboxylic acids or derivatives thereof;
(b) one or more diamines selected from the group consisting of aliphatic diamine, aromatic diamine and alkylaromatic; and
(c) at least one multifunctional diamine selected from the group consisting of tri-amines, tetra-amines, and penta-amines.

Any suitable multifunctional diamine may be used, including but not limited to, bis(hexamethylene)triamine, melamine, sym-triaminobenzene, triethylenetetramine, and mixtures thereof.

In one embodiment of the polymer blend composition, the composition comprises a polymer blend comprising a furan-based polyamide, as disclosed hereinabove, and a second polyamide. In an embodiment, the second polyamide comprises an aliphatic polyamide, an aromatic polyamide (polyaramid), a polyamide-imide or mixtures thereof. Suitable second polyamides include, but are not limited to, nylon-6, nylon-11, nylon-12, nylon 6-6, nylon 6-10, nylon 6-11, nylon 6-12, nylon 6/66 copolymer, nylon 6/12/66 terpolymer, poly(*para*-phenylene terephthalamide), poly(*meta*-phenylene terephthalamide), poly(*meta-*xylene adipamide) (MXD6), and mixtures thereof.

In an embodiment of the polymer blend composition, the composition comprises a polymer blend comprising poly(trimethylene furandicarbonamide) (3AF) and a second furan-based polyamide different from 3AF, wherein the furan-based polyamide comprises the following repeat unit: 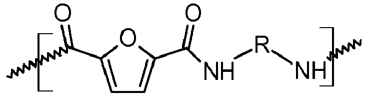 wherein R is selected from the group consisting of an aliphatic, an aromatic and an alkylaromatic group.

In another embodiment of the polymer blend composition, the composition comprises a polymer blend comprising poly(trimethylene furandicarbonamide) (3AF) and poly(alkylene furandicarbonamide). Poly(alkylene furandicarboxylate) can be prepared from 2,5-furan dicarboxylic acid or a derivative thereof and a C₂ ∼ C₁₈ aliphatic hydrocarbon or fluorocarbon diamine, as disclosed hereinabove.

In another embodiment of the polymer blend composition, the composition comprises a polymer blend comprising poly(alkylene furandicarbonamide) (RAF), and a second furan-based polyamide different from RAF, wherein the second furan-based polyamide is derived from two or more diacids comprising furan dicarboxylic acid and one or more diamines and comprises the following repeat units (1) and (2): 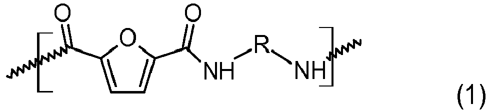 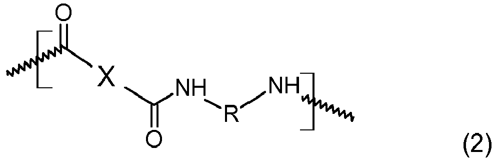 wherein X, R (= R1 and R2) are independently selected from an alkyl, an aromatic or an alkylaromatic group.

In an embodiment R1 and R2 are same, i.e. R = R1 = R2. In another embodiment, R1 and R2 are different, i.e. R = R1 and also R = R2 such that R1 ≠ R2. In another embodiment, R = R1, R2 and R3.

The polymer blend composition can further comprise additives commonly employed in the art such as process aids and property modifiers, such as, for example, antioxidants, plasticizers, UV light absorbers, antistatic agents, flame retardants, lubricants, colorants, nucleants, oxygen scavengers, fillers and heat stabilizers.

### Multi-laver Structures and Articles

The polymer blend compositions comprising furan-based polyamides, as described hereinabove are suitable for manufacturing:
∘ mono- and bi-oriented mono- and multi-layer film, cast and blown;
∘ mono- and bi-oriented mono- and multi-layer film, multi-layered with other polymers, cast and blown;
∘ mono-, multi-layer blown articles (for example bottles)
∘ mono-, multi-layer injection molded articles
∘ cling or shrink films for use with foodstuffs;
∘ thermoformed foodstuff packaging or containers from cast sheet, both mono- and multi-layered, as in containers for milk, yogurt, meats, beverages and the like;
∘ coatings obtained using the extrusion coating or powder coating method on substrates comprising of metals not limited to such as stainless steel, carbon steel, aluminum, such coatings may include binders, agents to control flow such as silica, alumina
∘ multilayer laminates made by extrusion coating, solvent or extrusion lamination with rigid or flexible backings such as for example paper, plastic, aluminum, or metallic films;
∘ foamed or foamable beads for the production of pieces obtained by sintering;
∘ foamed and semi-foamed products, including foamed blocks formed using pre-expanded articles; and
∘ foamed sheets, thermoformed foam sheets, and containers obtained from them for use in foodstuff packaging.

In an embodiment, there is a gas impermeable structure comprising two or more layers, wherein at least one of the layers is a gas permeation barrier layer comprising a furan-based polyamide comprises the following repeat unit: 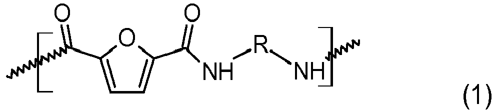 wherein R is selected from the group consisting of an aliphatic, an aromatic and an alkylaromatic group.

In an embodiment, R is a C2-C18 hydrocarbon or fluorocarbon group.

The furan-based polyamide having structure (1) as shown above can be derived from furan dicarboxylic acid or derivative thereof and one or more diamines selected from the group consisting of an aliphatic diamine, an aromatic diamine and an akylaromatic diamine. Exemplary furan-based polyamide of structure (1) include, but are not limited to poly(trimethylene furandicarbonamide) (3AF), poly(ethylene furandicarbonamide) (2AF), poly(butylene furandicarbonamide) (4AF) poly(pentamethylene furandicarbonamide) (5AF), poly(hexamethylene furandicarbonamide) (6AF), poly(octyllene furandicarbonamide) (8AF), poly(trimethylene-co-hexamethylene furandicarbonamide), and mixtures thereof.

In an embodiment, the gas permeation barrier layer comprises poly(trimethylene furandicarbonamide) (3AF).

In another embodiment, the gas permeation barrier layer comprises a polymer blend composition, as disclosed *supra,* comprising a polymer blend of a furan-based polyamide and a polymer selected from the group consisting of polyurethanes, polyesters, polyolefins, polyamides, polyimides, polycarbonates, polyethers, polyacrylates, styrenics, fluoropolymers, polysiloxanes, EVOH and mixtures thereof.

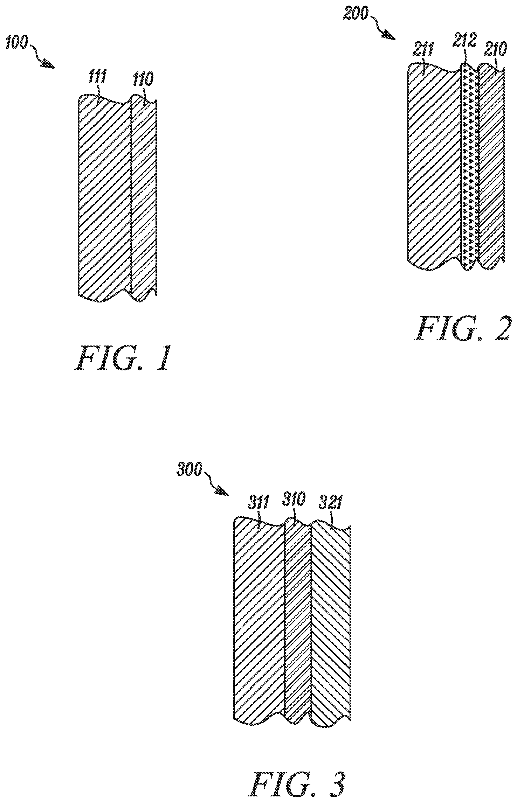

Figure 1 schematically illustrates a cross-sectional view of a portion of a multilayer structure 100 comprises at least two layers, in accordance with an embodiment of the present teachings. The multilayer structure 100, as shown in Figure 1 comprises a first layer 111 and a furan-based polyamide layer 110 disposed on at least a portion of the first layer 111, wherein the furan-based polyamide layer 110 provides a substantial barrier to gas permeation.

In an embodiment, the furan-based polyamide of the furan-based polyamide layer 110 is derived from:
i. one or more dicarboxylic acids or derivatives thereof selected from the group consisting of an aliphatic diacid, an aromatic diacid and an alkylaromatic diacid, wherein at least one of the dicarboxylic acid or derivative thereof is furan dicarboxylic acid or derivative thereof, and
ii. one or more diamines selected from the group consisting of an aliphatic diamine, an aromatic diamine and an alkylaromatic diamine.

In an embodiment, the furan-based polyamide comprises the following repeat unit: 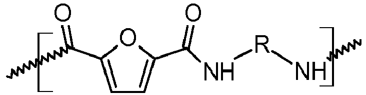 wherein R is selected from the group consisting of an aliphatic, an aromatic and an alkylaromatic group.

In an embodiment, R is a C2-C18 hydrocarbon or fluorocarbon group.

In another embodiment, the furan-based polyamide is derived from two or more diacids comprising furan dicarboxylic acid and one or more diamines and comprises the following repeat units (1) and (2): 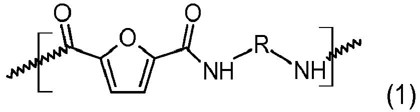 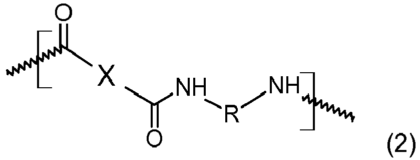 wherein X, R (= R¹ and R²) are independently selected from an aliphatic, an aromatic or an alkylaromatic group.

R¹ and R² can be same, i.e. R = R¹ = R²; or R¹ and R² can be different, i.e. R = R¹ and also R = R² such that R¹ ≠ R²; or R = R¹, R² and R³.

In another embodiment, the furan-based polyamide layer 110 comprises the polymer blend composition as disclosed hereinabove, comprising a polymer blend of the furan-based polyamide and a polymer selected from the group consisting of polyurethanes, polyesters, polyolefins, polyamides, polyimides, polycarbonates, polyethers, polyacrylates, styrenics, fluoropolymers, polysiloxanes, EVOH, and mixtures thereof,
wherein the furan-based polyamide is present in an amount in the range of 0.1-99.9% by weight, based on the total weight of the polymer blend.

In another embodiment, the furan-based polyamide layer 110 comprises the polymer blend composition as disclosed hereinabove, comprising a polymer blend of the furan-based polyamide and a second polyamide selected from the group consisting of nylon-6, nylon-11, nylon-12, nylon 6-6, nylon 6-10, nylon 6-11, nylon 6-12, nylon 6/66 copolymer, nylon 6/12/66 terpolymer, poly(*para-phenylene* terephthalamide), poly(*meta*-phenylene terephthalamide), poly(*meta*-xylene adipamide) (MXD6), and mixtures thereof,
wherein the furan-based polyamide is present in an amount in the range of 0.1-99.9% by weight, based on the total weight of the polymer blend.

In yet another embodiment, the furan-based polyamide layer comprises a polymer blend comprising poly(trimethylene furandicarbonamide) (3AF) and a second furan-based polyamide different from 3AF, and wherein the amount of 3A is 0.1-99.9% by weight, based on the total weight of the polymer blend.

In an embodiment, the furan-based polyamide layer comprises a polymer blend comprising poly(trimethylene furandicarbonamide) (3AF) and a poly(alkylene furandicarbonamide), and wherein the amount of 3AF is 0.1-99.9% by weight, based on the total weight of the polymer blend..

In an embodiment, the furan-based polyamide layer 110 the furan-based polyamide layer 110 provides a substantial barrier to gas permeation. In another embodiment, the furan-based polyamide layer 110 is moisture insensitive and provides a relatively constant gas permeability over a range of relative humidities.

The first layer 111 is selected from the group consisting of polyurethane, polyester, polyolefin, polyamide, polyimide, polycarbonate, polyether, polyacrylates, styrenics, fluoropolymer, polyvinylchlorides, epoxies, EVOH and polysiloxanes.
Figure 2 schematically illustrates a cross-sectional view of a portion of an exemplary multilayer structure 200 comprising at least three layers, in accordance with an embodiment of the present teachings. The multilayer structure 200, as shown in Figure 2 comprises a furan-based polyamide layer 210, a first layer 211, and a first tie layer 212 disposed between the furan-based polyamide layer 210 and the first layer 211, wherein the furan-based polyamide layer 210 comprises the furan-based polyamide compositions as disclosed hereinabove, and wherein the furan-based polyamide layer 210 provides a substantial barrier to gas permeation. Figure 3 schematically illustrates a cross-sectional view of a portion of an exemplary multilayer structure 300 comprising at least three layers, in accordance with an embodiment of the present teachings. The multilayer structure 300, as shown in Figure 3 comprises a furan-based polyamide layer 310 comprising the furan-based polyamide as disclosed hereinabove, a first layer 311 and a second layer 321, such that the furan-based polyamide layer 310 is sandwiched between the first layer 311 and the second layer 321, and wherein the furan-based polyamide layer 310 provides a substantial barrier to gas permeation. In an embodiment, the multilayer structure 300 further comprises a first tie layer (not shown) disposed between the furan-based polyamide layer 310 and the first layer 311 and a second tie layer (not shown) disposed between the furan-based polyamide layer 310 and a second layer 321, such that the furan-based polyamide layer 310 is sandwiched between the first tie layer and the second tie layer.

The multilayer structure of the present teachings may comprise other possible layer configurations not illustrated, including, but not limited to six layers, seven layers, eight layers, etc., wherein at least one layer is a furan-based polyamide layer comprising a furan-based polyamide, as disclosed herein above. In an embodiment, the furan-based polyamide layer comprises a furan-based polyamide. In another embodiment, the furan-based polyamide layer comprises the polymer blend composition comprising a blend composition of furan-based polyamide layer and another polymer, as disclosed hereinabove. The furan-based polyamide layer provides a substantial barrier to gas permeation in the multilayer structure. In an embodiment, the furan-based polyamide layer is moisture insensitive and provides a relatively constant gas permeability over a range of relative humidities.

Any suitable material may be used for the first layer 211, 311 and the second layer 321, including, but not limited to polymers, composites, metals, alloys, glass, silicon, ceramics, wood, and paper. In an embodiment, the first layer is selected from the group consisting polyurethane, polyester, polyolefin, polyamide, polyimide, polycarbonate, polyether, polyacrylates, styrenics, fluoropolymer, polyvinylchlorides, epoxies, EVOH and polysiloxanes. Exemplary materials for the first layer 211, 311, 411 and the second layer 421 include, but are not limited to aramids; polyethylene sulfide (PES); polyphenylene sulfide (PPS); polyimide (PI); polyamide (PA) such as Nylon; polyethylene imine (PEI); polyethylene naphthalate (PEN); polysulfone (PS); polyether ether ketone (PEEK); polyolefins such as PE, HDPE, LDPE, LLDPE, ULDPE, PP; poly(cyclic olefins); and poly(cyclohexylene dimethylene terephthalate), EvOH, poly(alkylene furandicarboxylate) such as PEF, PTF, PBF and poly(alkylene terephthalate), such as polyethylene terephthalate (PET), polytrimethylene terephthalate (PTT), and polybutylene terephthalate (PBT).

In an embodiment, the first layer 211, 311 and the second layer 321 comprises an aliphatic polyamide, an aromatic polyamide (polyaramid), a polyamide-imide or mixtures thereof. Suitable polyamides for the first layer and the second layer include, but are not limited to nylon-6, nylon-11, nylon-12, nylon 6-6, nylon 6-10, nylon 6-11, nylon 6-12, nylon 6/66 copolymer, nylon 6/12/66 terpolymer, poly(*para*-phenylene terephthalamide), poly(*meta*-phenylene terephthalamide), poly(*meta-*xylene adipamide) (MXD6), and mixtures thereof.

In an embodiment, the tie layer 212, as shown in Figure 2 comprises one or more olefin copolymers. The one or more olefin copolymers include, but are not limited to, propylene copolymers, ethylene copolymers and mixtures thereof.

"Propylene copolymer" refers to a polymer comprising repeat units derived from propylene and at least one additional monomer. Suitable propylene based copolymers include, but are not limited to, copolymers of propylene with another α-olefin as a monomer, including but not limited to ethylene, 1-butene, 1-pentene, 3-methyl-1-butene, 1-hexene or 4-methyl-1-pentene. Other comonomers include but not limited to maleic anhydride, acrylic acid, acrylates and methacrylates. Copolymers could be either random or block copolymers.

"Ethylene copolymer" refers to a polymer comprising repeat units derived from ethylene and at least one additional monomer.

The one or more ethylene copolymers comprised in the tie layer of the multilayer structure may be chosen among ethylene α-olefin, ethylene vinyl acetate copolymers, ethylene maleic anhydride copolymers, ethylene acrylic acid (or the neutralized salt form of the acid) copolymers, ethylene methacrylic acid (or the neutralized salt form of the acid) copolymers, ethylene glycidyl (meth)acrylate copolymers, ethylene alkyl (meth)acrylate copolymers, or combinations of two or more thereof. "Alkyl (meth)acrylate" refers to alkyl acrylate and/or alkyl methacrylate. Ethylene alkyl (meth)acrylate copolymers are thermoplastic ethylene copolymers derived from the copolymerization of ethylene comonomer and at least one alkyl (meth)acrylate comonomer, wherein the alkyl group contains from one to ten carbon atoms and preferably from one to four carbon atoms. More preferably, the ethylene copolymer comprised in the tie layer are chosen among ethylene α-olefin, ethylene vinyl acetate copolymers, ethylene methyl (meth)acrylate copolymers, ethylene ethyl (meth)acrylate copolymers, ethylene butyl (meth)acrylate copolymers, or combinations of two or more thereof.

When the ethylene copolymer used in the tie layer is an ethylene α-olefin copolymer, it comprises ethylene and an α-olefin of three to twenty carbon atoms. Preferred α-olefin include four to eight carbon atoms.

The one or more olefin homopolymers and/or copolymers can be modified copolymer, meaning that the copolymer is grafted and/or copolymerized with organic functionalities. Modified polymers for use in the tie layer may be modified with acid, anhydride and/or epoxide functionalities. Examples of the acids and anhydrides used to modify polymers, which may be mono-, di- or polycarboxylic acids are acrylic acid, methacrylic acid, maleic acid, maleic acid monoethylester, fumaric acid, furnaric acid, itaconic acid, crotonic acid, 2,6-naphthalene dicarboxylic acid, itaconic anhydride, maleic anhydride and substituted maleic anhydride, e.g. dimethyl maleic anhydride or citrotonic anhydride, nadic anhydride, nadic methyl anhydride, and tetrahydrophthalic anhydride, or combinations of two or more thereof, maleic anhydride being preferred.

Examples of epoxides used to modify polymers are unsaturated epoxides comprising from four to eleven carbon atoms, such as glycidyl (meth)acrylate, allyl glycidyl ether, vinyl glycidyl ether and glycidyl itaconate, glycidyl (meth)acrylates being particularly preferred. Epoxide-modified ethylene copolymers preferably contain from 0.05 to 15 wt% of an epoxide, the weight percentage being based on the total weight of the modified ethylene copolymer. Preferably, epoxides used to modify ethylene copolymers are glycidyl (meth)acrylates. The ethylene/glycidyl (meth)acrylate copolymer may further contain copolymerized units of an alkyl (meth)acrylate having from one to six carbon atoms and an .alpha.-olefin having 1-8 carbon atoms. Representative alkyl (meth)acrylates include methyl (meth)acrylate, ethyl (meth)acrylate, propyl (meth)acrylate, butyl (meth)acrylate, isobutyl (meth)acrylate, hexyl (meth)acrylate, or combinations of two or more thereof. Of note are ethyl acrylate and butyl acrylate. The α-olefin can be selected from the group of propylene, octene, butene and hexane, especially propylene.

Preferably, modified ethylene copolymers comprised in the tie layer are modified with acid, anhydride and/or glycidyl (meth)acrylate functionalities.

Exemplary ethylene based copolymers include, but are not limited to, polyethylene-co vinylacetate, polyethylene-co-methylacrylate, polyethylene-co-maleic anhydride, polyethylene-co-acrylate (i.e. methylacrylate, ethylacrylate, butylacrylate etc), polyethylene-co-glycidylacrylate, polyethylene-co-glycidylmethacrylate, polyethylene-covinylalcohol, polyethylene-co-acrylic acid; polyethylene-co-acrylic acid sodium salt, polyethylene-co-methylmethacrylate, polyethylene-co-methacrylic acid, and polyethylene-co-methacrylic acid sodium salt.

Copolymers and modified polymers useful for the present teachings are commercially available for example under the trademarks Nucrel®, Surlyn®, Elvax®, Elvaloy™AC, Elvaloy™, Bynel® from E. I. du Pont de Nemours and Company, Wilmington, Del. (DuPont).

The tie layers could also be used to improve the adhesion between layers comprising polar materials, for example polyamides and polyesters. Examples of such tie layers include but are not limited to, polyacrylates, aromatic polyesters, aliphatic polyesters, aliphatic-aromatic copolyesters, polyamides, polyesteramides, polyvinyl alcohol, aliphatic polycarbonates, aromatic polycarbonates, polymaleic anhydride or grafted polymaleic anhydride, polyvinylacetate, polyvinylacetate-co-maleic anhydride, polyvinylalcohol-co-vinylacetate, polyacrylate-co-vinylacatete, polyacrylate-covinylalcohol, polyacrylate-co-maleic anhydride, polyvinylalcohol-co-maleic anhydride, polyacrylic acid or the neutralized salt form of the acid, polyacrylic acid-co-vinyl alcohol, polyacrylic acid-co-vinyl acetate, polyacrylic acid-co-maleic anhydride, or blends of two or more components.

The gas permeation barrier layer 110, 210, 310 has a thickness in the range of 0.1-80% or 0.5-50% or 1-25% of the total thickness of the multilayer structure to provide a permeation barrier to a gas.

In an embodiment, the multilayer structure is a co-extruded multilayered structure. In another embodiment, the multilayer structure is a laminated structure.

In an embodiment, there is an article comprising the multilayer structure 100, 200, 300. The article can be a film, a sheet, a coating, shaped or modeled article, a layer in a multi-layer laminate, for example a shrink-wrap film., filaments, fibers, spun yarn, woven fabric, garment, or non-woven web. A film herein can be oriented or not oriented, or uniaxially oriented or biaxially oriented.

The difference between a sheet and a film is the thickness, but, as the thickness of an article will vary according to the needs of its application, it is difficult to set a standard thickness that differentiates a film from a sheet. Nevertheless, a sheet will be defined herein as having a thickness greater than about 0.25 mm (10 mils). Preferably, the thickness of the sheets herein are from about 0.25 mm to about 25 mm, more preferably from about 2 mm to about 15 mm, and even more preferably from about 3 mm to about 10 mm. In a preferred embodiment, the sheets hereof have a thickness sufficient to cause the sheet to be rigid, which generally occurs at about 0.50 mm and greater. However, sheets thicker than 25 mm, and thinner than 0.25 mm may be formed. Correspondingly, films as formed from the polymers hereof will in almost all cases have a thickness that is less than about 0.25 mm.

A film herein can be single layer or multilayer; oriented or not oriented; or uniaxially oriented or biaxially oriented. A film comprising a furan-based polyamide, as disclosed hereinabove, in the form of a homopolyamide, a copolyamide or a blend of furan-based polyamide with another polyamide exhibits moisture insensitivity, demonstrated by relatively constant gas permeability with change in relative humidity, as compared to other moisture sensitive polymers, such EVOH and Nylon. A film comprising a furan-based polyamides, as disclosed hereinabove, can be characterized by an oxygen permeability of less than about 100 cc-mil/m²-day-atm or less than 50 cc-mil/m²-day-atm or less than 30 cc-mil/m²-day-atm or less than 20 cc-mil/m²-day-atm less than 10 cc-mil/m²-day-atm less than 1 cc-mil/m²-day-atm; or a carbon dioxide permeability of less than about 500 cc-mil/m²-day-atm or less than 250 cc-mil/m²-day-atm or less than 100 cc-mil/m²-day-atm or less than 50 cc-mil/m²-day-atm or less than 25 cc-mil/m²-day-atm or less than 5 cc-mil/m²-day-atm.

"Fiber" is defined as a relatively flexible, unit of matter having a high ratio of length to width across its cross-sectional area perpendicular to its length. Herein, the term "fiber" is used interchangeably with the term "filament" or "end" or "continuous filament". The cross section of the filaments described herein can be any shape, such as circular or bean shaped, but is typically generally round, and is typically substantially solid and not hollow. Fiber spun onto a bobbin in a package is referred to as continuous fiber. Fiber can be cut into short lengths called staple fiber. Fiber can be cut into even smaller lengths called floc. Yarns, multifilament yarns or tows comprise a plurality of fibers. Yarn can be intertwined and/or twisted.

In another embodiment, the article can be a shaped or molded article, such as one or more of a container, a container and a lid, or a container and a closure, for example a container such as a beverage container.

In an embodiment, the multilayer structure, as disclosed herein above is in a form of a housing provided with a port for introducing a product in an enclosure defined by the housing, wherein the multilayer structure provides gas permeation barrier to the product.

In an embodiment, the product is an oxygen-sensitive product. Exemplary oxygen-sensitive product includes, but is not limited to, microbial culture, foods, chemicals. In another embodiment, the product is a moisture-sensitive product. Exemplary moisture-sensitive product includes, but is not limited to, food products, hygroscopic polymers like EVOH or ionomers. In yet another embodiment, the product is a carbonated beverage. In another embodiment, the product is a hydrocarbon fuel.

In an embodiment, the housing is in a form of a hose, a pipe, a duct, a tube, a tubing or a conduit.

In an embodiment, the housing is in a form of a container, a container and a lid, or a container and a closure.

In another embodiment, the multilayer structure is in a form of a hollow body selected from a group consisting of a hose, a pipe, a duct, a tube, a tubing or a conduit.

In another embodiment, the product is a chemical solvent based product and the multilayer structure is in a form of a bottle. Suitable chemical solvents include, but are not limited to, ethanol, methanol, ketones, toluene, xylene, isooctane, gasoline, kerosene, and mineral spirits. Examples of chemical solvent based products include, but are not limited to, household and industrial solvents, agricultural chemical products.

In an embodiment, the gas includes, but is not limited to, oxygen, carbon dioxide, water vapor, nitrogen, methane, chlorine, hydrogen sulfide, refrigerants, and vapors of chemical solvents. In an embodiment, the gas comprises oxygen, carbon dioxide and water vapor.

In an embodiment, there is an article for storage or transport of a product comprising the multilayer structure as disclosed hereinabove, in a form of a housing provided with a port for introducing said product in an enclosure defined by the housing, wherein the multilayer structure provides permeation barrier to the product. In an embodiment, the product is at least one of an oxygen sensitive product or a moisture sensitive product. The article may further comprise means for closing the port, such that upon closing the port, the product is isolated from the outside environment. The article may comprise one or more of a container, a container and a lid, or a container and a closure.

The article as disclosed herein above comprising a furan-based polyamide can be used for any suitable application, including, but not limited to food and drug packaging, medical devices, personal care products, electronics and semiconductors, paints and coatings, and chemical packaging.

### Additives

One or more of the barrier layer 110, 210, 110; the first or the second layer 311; and the tie layer 212 described hereinabove may contain one or more additives including, but not limited to, antioxidants, plasticizers, UV light absorbers, antistatic agents, flame retardants, lubricants, colorants, nucleants, oxygen scavengers, fillers and heat stabilizers.

Suitable antioxidants include, but are not limited to, 2,5-di-tert-butylhydroquinone, 2,6-di-tert-butyl-p-cresol, 4,4'-thiobis-(6-tertbutylphenol), 2,2'-methylene-bis-(4-methyl-6-tert-butylphenol), octadecyl-3-(3',5'-di-tert-butyl-4'-hydroxyphenyl) propionate, 4,4'-thiobis-(6-tertbutylphenol), etc.

Suitable UV light absorbers include, but are not limited to, ethylene-2-cyano-3,3'-diphenyl acrylate, 2-(2'-hydroxy-5'-methylphenyl)benzotriazole, 2-(2'-hydroxy-5'-methylphenyl)benzotriazole, 2-(2'-hydroxy-3'-tert-butyl-5'-methylphenyl)-5-chlorobenzotriazole, 2-hydroxy-4-methoxybenzophenone, 2,2'-dihydroxy-4-methoxybenzophenone, 2-hydroxy-4-methoxybenzophenone, etc.

Suitable plasticizers include, but are not limited to, phthalic acid esters such as dimethyl phthalate, diethyl phthalate, dioctyl phthalate, waxes, liquid paraffins, phosphoric acid esters, etc.

Suitable antistatic agents include, but are not limited to, pentaerythritol monostearate, sorbitan monopalmitate, sulfated polyolefins, polyethylene oxide, carbon wax, etc.

Suitable lubricants include, but are not limited to, ethylene bisstearoamide, butyl stearate, etc.

Suitable colorants include, but are not limited to, carbon black, phthalocyanine, quinacridon, indoline, azo pigments, red oxide, etc.

Suitable filler include, but are not limited to, glass fiber, asbestos, ballastonite, calcium silicate, talc, montmorillonite, etc.

Suitable nucleants to induce crystallization in the furan-based polyamide include, but are not limited to fine dispersed minerals like talc or modified clays.

Suitable oxygen scavengers to improve the oxygen barrier include, but are not limited to, ferrous and non-ferrous salts and added catalysts.

### Process

In an aspect, there is a method of making a gas-impermeable product comprising forming a multilayer structure having two or more layers, wherein at least one of the layers is a gas permeation barrier layer comprising a furan-based polyamide, as disclosed hereinabove.

In another aspect, there is a method of improving a shelf-life of a product comprising:
a) providing a gas-impermeable structure in a form of a housing provided with a port for introducing a product in an enclosure defined by the housing, wherein the gas-impermeable structure comprises one or more layers, wherein at least one of the layers comprises a furan-based polyamide, as disclosed hereinabove; and
b) storing the product in the enclosure defined by the housing of the gas-impermeable structure, wherein the gas permeation barrier layer prevents permeation of gases thereby improving the shelf life of the product.

Non-limiting examples of compositions and methods disclosed herein include:
1. A multilayer structure comprising:
   a) a first layer selected from the group consisting of polymers, composites, metals, alloys, glass, silicon, ceramics, wood, and paper; and
   b) a furan-based polyamide layer disposed on at least a portion of the first layer, wherein the furan-based polyamide is derived from:
      i. one or more dicarboxylic acids or derivatives thereof selected from the group consisting of an aliphatic diacid, an aromatic diacid and an alkylaromatic diacid, wherein at least one of the dicarboxylic acid is furan dicarboxylic acid or a derivative thereof, and
      ii. one or more diamines s selected from the group consisting an aliphatic diamine, an aromatic diamine and an alkylaromatic diamine,
      wherein the furan-based polyamide layer provides a substantial barrier to gas permeation.
2. The multilayer structure of embodiment 1, wherein the first layer is selected from the group consisting of polyurethane, polyester, polyolefin, polyamide, polyimide, polycarbonate, polyether, polyacrylates, styrenics, fluoropolymer, polyvinylchlorides, epoxies, EVOH and polysiloxanes.
3. The multilayer structure of embodiment 1 or 2, wherein the furan-based polyamide comprises the following repeat unit: 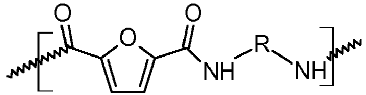 wherein R is selected from the group consisting of an alkyl, an aromatic and an alkylaromatic group.
4. The multilayer structure of embodiment 1, 2, or 3, wherein R is a C2-C18 hydrocarbon or fluorocarbon group.
5. The multilayer structure of embodiment 1, 2, 3, or 4, wherein the furan-based polyamide layer is a polymer blend of the furan-based polyamide and a polymer selected from the group consisting of polyurethanes, polyesters, polyolefins, polyamides, polyimides, polycarbonates, polyethers, polyacrylates, styrenics, fluoropolymers, polysiloxanes, EVOH, and mixtures thereof,
   wherein the furan-based polyamide is present in an amount in the range of 0.1-99.9% by weight, based on the total weight of the polymer blend.
6. The multilayer structure of embodiment 1, 2, 3, 4, or 5, wherein the furan-based polyamide layer is a polymer blend comprising poly(trimethylene furandicarbonamide) (3AF) and a second furan-based polyamide different from 3AF, and
   wherein the amount of 3AF is 0.1-99.9% by weight, based on the total weight of the polymer blend.
7. The multilayer structure embodiment 1, 2, 3, 4, 5, or 6, further comprising a second layer disposed on at least a portion of the furan-based polyamide layer, such that at least a portion of the furan-based polyamide layer is sandwiched between the first tie layer and the second layer.
8. The multilayer structure of embodiment 1, 2, 3, 4, 5, 6, or 7,
   wherein the furan-based polyamide is a furan-based polyamide derived from:
   a) two or more diacids or derivatives thereof selected from the group consisting of an aliphatic diacid, an aromatic diacid and an alkylaromatic diacid,
      wherein the two or more diacids comprises at least 50.1 mol% of furan dicarboxylic acid or a derivative thereof, based on the total amount of the diacids or derivatives thereof; and
   b) one or more diamines selected from the group consisting of an aliphatic diamine, an aromatic diamine and an alkylaromatic diamine.
9. An article comprising the multilayer structure of embodiment 1, 2, 3, 4, 5, 6, 7, or 8, wherein the article is a film, a sheet, a coating, shaped or modeled article, a layer in a multilayer laminate, filaments, fibers, spun yarn, woven fabric, garment, or non-woven web, and wherein the multilayer structure provides gas permeation barrier to a product.
10. The article of embodiment 9, wherein the product is at least one of an oxygen-sensitive product, a moisture-sensitive product, or a carbonated beverage.
11. A gas impermeable structure comprising two or more layers, wherein at least one of the layers is a gas permeation barrier layer comprising a furan-based polyamide comprises the following repeat unit: 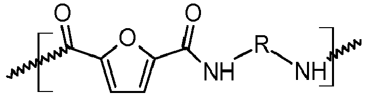 wherein R is selected from the group consisting of an aliphatic, an aromatic and an alkylaromatic group.
12.A method of improving a shelf-life of a product comprising:
   a) providing a gas-impermeable structure in a form of a housing provided with a port for introducing a product in an enclosure defined by the housing, wherein the gas-impermeable structure comprises one or more layers, wherein at least one of the layers comprises a furan-based polyamide, wherein the furan-based polyamide is derived from:
      i. one or more dicarboxylic acids or derivatives thereof selected from the group consisting of an aliphatic diacid, an aromatic diacid and an alkylaromatic diacid, wherein at least one of the dicarboxylic acid is furan dicarboxylic acid or derivative thereof, and
      ii. one or more diamines selected from the group consisting an aliphatic diamine, an aromatic diamine and an alkylaromatic diamine; and
   b) storing the product in the enclosure defined by the housing of the gas-impermeable structure, wherein the gas permeation barrier layer prevents permeation of gases thereby improving the shelf life of the product.
13.A composition comprising a polymer blend of a furan-based polyamide and a polymer selected from the group consisting of polyurethanes, polyesters, polyolefins, polyamides, polyimides, polycarbonates, polyethers, polyacrylates, styrenics, fluoropolymers, polysiloxanes, EVOH, and mixtures thereof, wherein the furan-based polyamide is derived from:
   i. one or more dicarboxylic acids or derivatives thereof selected from the group consisting of an aliphatic diacid, an aromatic diacid and an alkylaromatic diacid, wherein at least one of the dicarboxylic acid or derivative thereof is furan dicarboxylic acid or derivative thereof, and
   ii. one or more diamines selected from the group consisting of an aliphatic diamine, a cycloaliphatic diamine, an aromatic diamine, an arylaliphatic diamine and an alkylaromatic diamine,
   wherein the furan-based polyamide is present in an amount in the range of 0.1-99.9% by weight, based on the total weight of the polymer blend.
14. The composition of embodiment 13, comprising the polymer blend of a furan-based polyamide and a second polyamide selected from the group consisting of nylon-6, nylon-11, nylon-12, nylon 6-6, nylon 6-10, nylon 6-11, nylon 6-12, nylon 6/66 copolymer, nylon 6/12/66 terpolymer, poly(*para-phenylene* terephthalamide), poly(*meta*-phenylene terephthalamide), poly(*meta*-xylene adipamide) (MXD6), and mixtures thereof,
   wherein the furan-based polyamide is present in an amount in the range of 0.1-99.9% by weight, based on the total weight of the polymer blend.
15. The composition of embodiment 13, comprising the polymer blend comprises poly(trimethylene furandicarbonamide) (3AF) and a second furan-based polyamide different from 3AF, and
   wherein the amount of 3AF is 0.1-99.9% by weight, based on the total weight of the polymer blend.

Unless otherwise defined, all technical and scientific terms used herein have the same meaning as commonly understood by one of ordinary skill in the art to which this disclosure belongs. Although methods and materials similar or equivalent to those described herein can be used in the practice or testing of embodiments of the disclosed compositions, suitable methods and materials are described below. All publications, patent applications, patents, and other references mentioned herein are incorporated by reference in their entirety, unless a particular passage is cited. In case of conflict, the present specification, including definitions, will control. In addition, the materials, methods, and examples are illustrative only and not intended to be limiting.

In the foregoing specification, the concepts have been disclosed with reference to specific embodiments. However, one of ordinary skill in the art appreciates that various modifications and changes can be made without departing from the scope of the disclosure as set forth in the claims below.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all embodiments.

### EXAMPLES

The present disclosure is further exemplified in the following Examples. It should be understood that these Examples, while indicating certain preferred aspects herein, are given by way of illustration only. From the above discussion and these Examples, one skilled in the art can ascertain the essential characteristics of the disclosed embodiments, and without departing from the spirit and scope thereof, can make various changes and modifications to adapt the disclosed embodiments to various uses and conditions.

### TEST METHODS

### Molecular Weight by Size Exclusion Chromatography

A size exclusion chromatography system, Alliance 2695™ (Waters Corporation, Milford, MA), was provided with a Waters 414™ differential refractive index detector, a multi-angle light scattering photometer DAWN Heleos II (Wyatt Technologies, Santa Barbara, CA), and a ViscoStar™ differential capillary viscometer detector (Wyatt). The software for data acquisition and reduction was Astra® version 5.4 by Wyatt. The columns used were two Shodex GPC HFIP-806M™ styrene-divinyl benzene columns with an exclusion limit of 2 x 10⁷ and 8,000/30cm theoretical plates; and one Shodex GPC HFIP-804M™ styrene-divinyl benzene column with an exclusion limit 2 x 10⁵ and 10,000/30cm theoretical plates.

The specimen was dissolved in 1,1,1,3,3,3-hexafluoro-2-propanol (HFIP) containing 0.01 M sodium trifluoroacetate by mixing at 50 °C with moderate agitation for four hours followed by filtration through a 0.45 µm PTFE filter. Concentration of the solution was circa 2 mg/mL.

Data was taken with the chromatograph set at 35°C, with a flow rate of 0.5 ml/min. The injection volume was 100 µl. The run time was 80 min. Data reduction was performed incorporating data from all three detectors described above. Eight scattering angles were employed with the light scattering detector. No standard for column calibration was involved in the data processing.

### Molecular Weight by Intrinsic Viscosity

Intrinsic viscosity (IV) was determined using the Goodyear R-103B Equivalent IV method, using T-3, Selar® X250, Sorona®64 as calibration standards on a Viscotek® Forced Flow Viscometer Modey Y-501C. Methylene chloride/trifluoro acetic acid was used as a solvent carrier for Example 1, whereas Phenol/1,1,2,2-tetrachloroethane (60/40) was used for Examples 4-10.

### Thermal Analysis

Glass transition temperature (T_{g}) and melting point (Tₘ) were determined by differential scanning calorimetry (DSC) performed according to ASTM D3418-08. Thermal degradation was recorded on a thermal gravimetric analysis (TGA) instrument recording weight loss as function of temperature.

### ¹H-NMR Spectroscopy

¹H-NMR and ¹³C NMR spectra were recorded on a 400 MHz NMR instrument in deuterated dimethylsulfoxide (DMSO-d6) or deuterated methylene chloride (CD₂Cl₂) for polyamide of Example 1 and in deuterated trifluoroacetic acid (TFA-d) for polyamides of Examples 4-10. Proton chemical shifts are reported in ppm downfield of TMS using the resonance of the deuterated solvent as internal standard.

### Gas Barrier Testing

Produced samples (films) were tested for oxygen (O₂), carbon dioxide (CO₂) and water vapor barrier properties using MOCON instruments according to ASTM methods D3985-05 (oxygen) and F2476-05 (carbon dioxide). Results are depicted as g-mil/m²-day. Details of the test conditions are given below:
- Oxygen testing:
   ∘ Testing unit: MOCON OX-TRAN® 2/61 (films)
   ∘ Temperature: 23°C
   ∘ Permeant: 50% relative humidity (for Example 1E and Comparative Example B and C, Oxygen testing was done at relative humidity from 0% to 100%, as shown in Table 2)
- Carbon dioxide testing:
   ∘ Testing unit: MOCON PERMATRAN®™ C 4/41 (films)
   ∘ Temperature: 23°C
   ∘ Permeant: 100% carbon dioxide, 50% humidity.

### MATERIALS

As used in the Examples below, 10 mills thick Kapton® polyimide films, nylon-6 pellets and EVOH were obtained from the DuPont Company (Wilmington, DE) and was used as received. Thionyl chloride (>99% purity), pentane (anhydrous, >99% purity), terephthaloyl chloride (TPA-CI) (≥ 99.9% purity), 1,3-propane diamine (≥ 99% purity), hexamethylene diamine (98 % purity), chloroform, and sodium hydroxide were procured from Sigma-Aldrich. DMF was obtained from Acros. For Example 1, 2,5-furandicarboxylic acid (FDCA) was obtained from Sarchem labs (Farmingdale, NJ), whereas for Examples 4-10, 2,5 furan dicarboxylic acid (99+% purity) was obtained from AstaTech Inc. (Bristol, PA). Chloroform (Drisolv®) was obtained from EDM and used as received. PET (Polyclear PET 1101) was obtained from Indorama Corporation. MXD6 (Polyamide MXD6/Nylon-MXD6) from MGC Advanced Polymers (S Chesterfield, VA). All chemicals were used as received unless otherwise specified.

### Example 1: Preparation of a Furan-Based Polvamide (poly(trimethylene furandicarbonamide) (3AF)) Film And Measurement of 3AF Film Barrier Properties

### Step 1A: Preparation of 2,5-furandiacid chloride (FDC-CI)

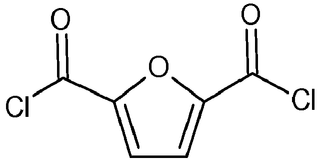

Using oven dried equipment in a dry box, a 500mL round bottom flask with a magnetic stir bar and reflux condenser was charged with 100.495g (0.644moles) of 2,5-furandicarboxylic acid and 150mL (2.056moles) of thionyl chloride. To the white slurry was added 150microL of DMF and the mixture was removed from the dry box and placed under static nitrogen and then was placed into an oil bath set at 70°C. The white slurry slowly turned into a clear yellow solution. The mixture was heated in the 70°C for 20hours and then returned to the dry box. A large mass comprised of long crystals formed as the reaction mixture cooled to room temperature. About 80mL of pentane was added and the mixture was stirred for 30minutes. The white crystalline solid was filtered then washed three times with 50mL of pentane. The crystalline solid was dried at room temperature under high vacuum providing 103.65g (-83.4%) of the product. ¹H-NMR (CD₂Cl₂) δ: 7.61 (s, 2H).

### Step 1B: Preparation of Furan-Based Polvamide (poly(trimethylene furandicarbonamide) (3AF)) from FDC-CI and 1,3-diaminopropane

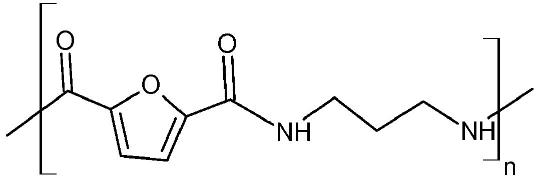

To a 1000mL beaker 10g (51.8mmoles) of 2,5-furandiacid chloride dissolved in 500mL of chloroform was charged. Sodium hydroxide (4.2g, 0.103moles) and 1,3-diaminopropane (4.6g, 62mmoles) dissolved in 400mL of distilled water was added on top of the organic phase and a polyamide film was formed at the interphase of the two solutions. A tweezers was used to capture the formed polymer and the film was captured on a horizontally rotating ½ inch diameter steel bar positioned about 5 inches (12.5cm) above the beaker. The steel bar was rotated at a speed of 100 rpm and the polyamide film was captured with continuous stirring for about 120 minutes. After completion of the polymerization the polymer was removed from the stir bar, washed continuously with distilled water and acetone. The washed polymer was placed in a vacuum oven and dried under vacuum at 70 °C until a constant weight was reached. ∼7g of the furan-based polyamide, poly(trimethylene furandicarbonamide) (3AF) was collected after drying for 24 hours. T_{g} was ca. 171°C (DSC, 10°C/min, 2^{nd} heat), no melting was observed. TGA confirmed thermal stability up to 400°C. ¹H-NMR (DMSO-d6) δ: 8.20 (s, 2H), 7.10 (s, 2H), 3.40 (m, 4H), 1.75 (m, 2H). Mₙ (SEC) ∼ 11 300 D, PDI 5.14.

### Step 1C: Preparation of a Film from the Furan-Based Polyamide, 3AF obtained in Step 1B

The 3AF polymer prepared above was compression molded into 0.1-0.12 millimeter thick films using a hydraulic platen press. The polymer was placed in a 15x15 centimeter frame supported on Kapton® film. The polymer sample and the Kapton® film was placed between two sheets of fiberglass reinforced Teflon® and in turn between two brass sheets and placed into a pre-heated Pasadena press. The press was pre-heated to a temperature of 220°C and the film sandwich was placed between the platen. The film sandwich was treated at 0 psig for 6 minutes to achieve a uniform melt before applying pressure. The pressure was raised to 10,000 psig and held for 8 minutes. Afterwards, the sample was removed from the press and put into an ice bath to rapidly quench the film. The produced and quenched film was separated from the Teflon® sheet, and measured for its permeation. DSC confirmed that films so produced were fully amorphous and no melting was observed.

### Step 1D: Gas Barrier Performance of the Furan-Based Polyamide. 3AF

3AF, a furan-based polyamide film was analyzed for permeation towards oxygen and carbon dioxide. Summarized in Table 1 are permeation results (50%RH, 23°C) for oxygen and carbon dioxide.

### Comparative Example A: Gas Barrier Performance of a PET Film

A procedure similar to step 1D of Example 1 was used to analyze PET (Laser 9921) polymer films for their permeation towards oxygen and carbon dioxide. Results are summarized in Table 1.

**Table 1: Gas Permeability (50%RH, 23°C)**

| | Sample | Morphology | Oxygen Permeability (cc-mil/m²-day) | Carbon Dioxide Permeability (cc-mil/m²-day) |
|---|---|---|---|---|
| Example 1 | 3AF | amorphous | 2.5 | 70 |
| Comparative Example A | PET | amorphous | 164 | -1000 |

As shown in the Table 1, the furan-based polyamide, 3AF (poly(trimethylene furandicarbonamide)) has significantly lower oxygen and carbon dioxide permeabilities as compared to PET (poly(ethylene terephthalate)), a commonly used polyester for packaging applications.

### Step 1E: Effect of Moisture on the Gas Barrier Performance of the 3AF

3AF, a furan-based polyamide film was analyzed for its permeation towards oxygen and carbon dioxide. Summarized in Table 2 are oxygen permeation results at various RH%.

### Comparative Example B & C: Effect of Moisture on the Gas Barrier Performance of MXD6 and EvOH Films

A procedure similar to step 1D of Example 1 was used to analyze MXD6 (MAP), EvOH (32%; DuPont) polymer films for their permeation towards oxygen and carbon dioxide at various relative humidities. Results are summarized in Table 2

**Table 2: Gas Permeability (23°C)**

| | | Example 1 | Comparative Example B | Comparative Example C |
|---|---|---|---|---|
| Polymer | | 3AF | MXD6 | EvOH |
| Oxygen Permeabil ity (cc-mil/m2-day) at Relative Humidity (RH) | 0% RH | 0.7 | 13.1 | 0.3 |
| | 35% RH | - | 5.7 | - |
| | 50% RH | 2.5 | 4.9 | - |
| | 63% RH | - | - | 1.2 |
| | 75% RH | - | 5.7 | - |
| | 80% RH | 2.3 | - | - |
| | 85% RH | - | - | 14 |
| | 87% RH | - | 5.3 | - |
| | 100% RH | - | - | 33.5 |

As shown in Table 2, the furan-based polyamide, 3AF (poly(trimethylene furandicarbonamide)) exhibits surprising result of stable oxygen barrier performance with increasing relative humidity, similar to another specially designed moisture-insensitive polyamide (MXD6). This stable behavior is in contrast to EVOH which shows a decrease in oxygen barrier performance with increase in relative humidity.

### Example 2: Preparation of Film from a Composition comprising a blend of 3AF and Nylon-6

1 g of Nylon-6 was dissolved in 10 mL of HFIP, and 1 g of 3AF was dissolved in 10 mil of HFIP. The two solutions were mixed together with a weight ratio of 3AF/Nylon-6 equal to 1/3. The mixture solution was casted at room temperature over weekend (>48 hr) resulting in 4 mil thick haze film.

### Example 3: Preparation of a Multilayer Structure. Nylon-6/3AF/Nylon-6 Laminate film

### Step 3A: Preparation of Laminate precursor 1, Nylon-6 film

Nylon-6 film was prepared by Nylon-6 pellets. Pellets were dried for a minimum of 12 hours in a vacuum oven at 80°C, under vacuum with nitrogen flow. After drying, a Pasadena PHI P-215C heated press was set to -10 °C above the melting point of the polymers to be pressed. Once the desired temperature was achieved, ∼1g of dried sample pellets were placed between two pieces of gold Teflon® paper and placed in the open press. The upper press platen was then lowered until contact was made with the top of the samples. After ∼7 minute of temperature equilibration, pressure was slowly increased on the sample to 5,000 LB (-78PSI) for 2 min then increased to 10,000 LB (-156 PSI) for 5 min. Then the sample was quickly removed from the oven and quenched in an ice water bath. The resulted film was 8 mil thick haze film, which was cut in half to be used in making a laminate with 3AF.

### Step 3B: Preparation of Laminate precursor 2: 3AF film

1 g of 3AF was dissolved in 4 ml of HFIP. A 20 mil film applicator was used to make a film on gold Teflon® paper. The film was casted at RT over weekend (>48 hrs) resulting in 6.4 mil thick clear film, which was cut in half to be used in making a laminate with Nylon-6.

### Step 3C: Preparation of Multilayer Structure, Nylon-6/3AF/Nylon-6 Laminate film

The laminates were composed with one layer of above Nylon-6 film at the bottom and 3AF film in the middle, and the same Nylon-6 film on top. The final laminate film was prepared by hot pressing at 260 °C for 2 min. The resulted film was -12 mil thick haze film. The resulted laminate of Nylon-6 and 3AF was tested for the oxygen barrier test. Summarized in Table 3 are permeation results for oxygen.

### Comparative Example D: Gas Barrier Performance of a PET Film

A procedure similar to step 3C of Example 3 was used to analyze Nylon-6 polymer film for permeation towards oxygen. Results are summarized in Table 3.

**Table 3: Gas Permeability (50%RH; 23°C)**

| | **Sample** | **Composition: 3AF/Nylon-6 by weight%** | **Oxygen Permeability (cc-mil/m²-day)** |
|---|---|---|---|
| Example 3 | Nylon-6/3AF/Nylon-6 | ∼28/72 | 16 |
| Comparative Example D | Nylon-6 | 0/100 | ∼35 |
| Comparative Example A | PET | -- | 164 |

As shown in Table 3, the presence of 28 weight% of furan-based polyamide, 3AF in a multilayer structure comprising 3AF in between two nylon-6 layers improved the barrier performance of the multilayer film (Example 3) as compared to single layer film containing 100% nylon-6 (Comparative Example D). Furthermore, the barrier performance of the multilayer structure comprising 28 weight% of 3AF was 10 times better than 100% PET (Comparative Example A).

### Example 4: Preparation of furan-based polyamide from FDC-CI,TPA-CI, and 1,3-diaminopropane (PDA) using Interfacial Polymerization.

### Step 4A: Preparation of Furan Diacid Chloride (FDC-CI):

FDC-CI was prepared in a smaller batch with the materials and procedure outlined in Step 1A using a 250 mL round bottom flask. 1H-NMR (CH2CI2-d) δ: 7.49 (s, 2H), 13C-NMR (CH2CI2-d) δ: 124.04 (-CH), 149.71 (-C-), 156.36 (C=O).

### Step 4B: Preparation of Furan-Based Polvamide from FDC-CI,TPA-CI, and 1,3-diaminopropane (PDA)

A furan-based polyamide was synthesized from the monomers: FDC-CI, TPA-CI and 1,3-diaminopropane (PDA), the feed amounts of which are summarized in Table 4. First, an organic solution was prepared in a 2 L-beaker by charging it with FDC-CI (9.5 g) from Step 1A, TPA-CI (10 g), and 800 mL of chloroform, and stirring with a magnetic stirrer bar until dissolution occurred. Next an aqueous solution was prepared in a 1 L-beaker by charging it with 6.7 g of sodium hydroxide, 7.3 g of propanediamine (PDA), and 800 mL distilled water, and stirring using a magnetic stir bar until dissolution occurred. Next, the aqueous solution was slowly charged to the beaker containing the organic solution to creating a two layer system whereby the organic phase was the bottom layer. After that, a polymer product was generated at the interface between the aqueous layer and the organic layer which was pulled up using a pair of tweezers and attached to the automatically rotating bar. Then, the polymer product was continuously drawn from the interface and twisted around the automatically rotating bar. The reaction was performed for about 1-3 hours while the speed was kept constant to thereby obtain a polymer product. Lastly, the generated polymer product was washed with water and dried under vacuum at 110 °C for 1 day. The weight average molecular weight of the as-prepared furan-based was 65000 g/mole, as determined by Gel Permeation chromatography (GPC). The intrinsic viscosity of the as-prepared furan-based polyamide was determined to be 0.763 dL/g, by solution viscometry. T_{g} was ca. 169 °C (DSC, 10°C/min, 2nd heat). Mole % values, in the final polymer as provided in 6 were calculated by integration from the ¹H NMR spectra. ¹H-NMR (CF₃COOH-d) δ: 8.09 (m, 4H), 7.49 (m, 2H), 3.89 (m, 4H), 2.26 (m, 2H).

**Table 4: Summary of molar feed ratios**

| Example # | Mole % TPA | Mole % FDCA | Mole % PDA | Mole % HMD |
|---|---|---|---|---|
| Example 4 | 50 | 50 | 100 | 0 |
| Example 5 | 25 | 75 | 100 | 0 |
| Example 6 | 25 | 75 | 0 | 100 |
| Example 7 | 0 | 100 | 50 | 50 |
| Example 8 | 25 | 75 | 50 | 50 |
| Example 9 (3AF) | 0 | 100 | 100 | 0 |
| Example 10 (6AF) | 0 | 100 | 0 | 100 |

### Step 4C: Preparation of Melt-Pressed Films:

As in Example 1C, dry solids of the polymers were pressed between two PTFE-coated sheets at 220 °C at 10,000 lb of force for 2 minutes on a Pasadena hot press to make the film (3-10 mil). The film was cooled in air at a rate 200-400 °C/min.

### Example 5: Preparation of Furan-Based Polyamide from FDC-CI,TPA-CI, and 1,3-diaminopropane (PDA)

A furan-based polyamide was synthesized from FDC-CI, TPA-CI and 1,3-diaminopropane (PDA) using procedure described in Example 4, except that the monomer feed amounts of FDC-CI and TPA-CI were changed, as given in Table 4. The weight average molecular weight of the polymer as determined by Gel Permeation chromatography (GPC), the intrinsic viscosity as determined by solution viscometry, and the T_{g} (DSC, 10°C/min, 2nd heat) are provided in Table 5. Mole % values, in the final polymer as provided in Table 5 were calculated by integration from the ¹H NMR spectra. ¹H-NMR (CF₃COOH-d) δ: 8.09 (m, 4H), 7.49 (m, 2H), 3.89 (m, 4H), 2.26 (m, 2H).

### Example 6: Preparation of Furan-Based Polvamide from FDC-CI,TPA-CI, and hexamethylene diamine (HMD)

A furan-based polyamide was synthesized from FDC-CI, TPA-CI and hexamethylene diamine (HMD) using procedure described in Example 4, except that HMD was used instead of PDA and the amounts of FDC-CI and TPA-CI were changed as shown in Table 4. The weight average molecular weight of the polymer as determined by Gel Permeation chromatography (GPC), the intrinsic viscosity as determined by solution viscometry, and the T_{g} (DSC, 10°C/min, 2nd heat) are provided in Table 5. Mole % values, in the final polymer, are provided in Table 5 and were calculated by integration from the ¹H-NMR (CF₃COOH-d) δ: 8.11 (m, 4H), 7.54 (m, 2H), 3.84-3.43 (m, 4H), 2.02-1.90 (m, 4H), 1.65 (m, 4H).

### Examples 7: Preparation of Furan-Based Polyamide from FDC-CI, 1,3-diaminopropane (PDA) and hexamethylene diamine (HMD)

A furan-based polyamide was synthesized from FDC-CI, diaminopropane (PDA) and hexamethylene diamine (HMD) using procedure described in Example 4, except that only FDC-CI was used instead of both FDC-CI and TPA-CI, and that two diamines were used HMD and PDA as shown in Table 4. The weight average molecular weight of the polymer as determined by Gel Permeation chromatography (GPC), the intrinsic viscosity as determined by solution viscometry, and the T_{g} (DSC, 10°C/min, 2nd heat) are provided in Table 5. Mole % values, in the final polymer as provided in Table 5 were calculated by integration from the ¹H NMR spectra. ¹H-NMR (CF₃COOH-d) δ: 7.57-7.49 (m, 2H), 3.9-3.6 (m, 8H), 2.24 (m, 2H), 1.87 (m, 4H), 1.62 (m, 4H).

### Example 8: Preparation of Furan-Based Polvamide from FDC-CI, TPA-CI, 1,3-diaminopropane (PDA) and hexamethylene diamine (HMD)

A furan-based polyamide was synthesized from FDC-CI, TPA-CI, PDA and hexamethylene diamine (HMD) using procedure described in Example 4, except the monomer feed amounts of FDC-CI and TPA-CI were changed, and two diamines were employed, as shown in Table 4. The weight average molecular weight of the polymer as determined by Gel Permeation chromatography (GPC), the intrinsic viscosity as determined by solution viscometry, and the T_{g} (DSC, 10°C/min, 2nd heat) are provided in Table 5. Mole % values, in the final polymer as provided in Table 5 were calculated by integration from the ¹H NMR spectra. ¹H-NMR (CF₃COOH-d) δ: 8.07 (m, 4H), 7.49 (m, 2H), 3.9-3.6 (m, 8H), 2.23 (m, 2H), 1.86 (m, 4H), 1.61 (m, 4H).

### Example 9: Preparation of Furan-Based Polvamide from FDC-CI and 1,3-diaminopropane (PDA)

In preparing a separate batch of 3AF, the same material demonstrated in Example 4, a 500ml three-necked flask equipped with a nitrogen adaptor, mechanical stirrer, glass stir rod with a Teflon blade, and a drop funnel was set up. To the flask was charged 7.352 g (0.0248 mol) 1,3-propanediamine (PDA) in 160ml of water containing 7.12 g of NaOH. In dry box, a solution of 21.032g (0.109 mol) of 2,5-furan dicarboxylic acid chloride (FDC-CI) in 160ml of dry chloroform was prepared. The chloroform solution was transferred into the drop funnel connected to the flask. The aqueous solution in the flask was stirred under nitrogen at ∼500rpm in an ice water bath. The chloroform solution was added to the 500 mL flask through the drop funnel as a steady slow stream, immediately forming white solids. The mixture was stirred for 1 hour at 500 rpm and then at 200 rpm overnight. After stirring was stopped, the white solids were washed with water 3-5 times and then isolated by decanting. The obtained crude polymer was chopped into small pieces and placed in a 500 mL round bottom flask equipped with a magnetic stir bar and a condenser. Methanol (400 mL) was added and the mixture was heated at 60 °C for 48 hours, during which the methanol was refreshed after 24 hours. After cooling, the polymer was isolated, washed by water and then acetone, and dried in a vacuum oven at 40 °C. The final product was a white solid with 55% yield.

### Example 10: Preparation of Furan-Based Polvamide from FDC-CI and 1,6-hexamethylenediamine (HMD)

A furan-based polyamide was synthesized from FDC-CI and HMD using the procedure described in Example 9. The final product was a white solid with 39% yield.

**Table 5: Summary of properties of the resulting furan-based polyamides and polyamides**

| Example # | Mole % TPA | Mole % FDCA | Mole % PDA | Mole % HMD | Mw (Kg/mol) | IV (dL/g) | Tg (°C) |
|---|---|---|---|---|---|---|---|
| Example 4 | 37 | 63 | 100 | 0 | 65 | 0.763 | 169 |
| Example 5 | 19 | 81 | 100 | 0 | 47 | 0.449 | 162 |
| Example 6 | 24 | 76 | 0 | 100 | 107 | 0.735 | 142 |
| Example 7 | 0 | 100 | 35 | 63 | 108 | 1.082 | 154 |
| Example 8 | 18 | 82 | 37 | 62 | 114 | 0.997 | 145 |
| Example 9 | 0 | 100 | 100 | 0 | 82 | 0.90 | 170 |
| Example 10 | 0 | 100 | 0 | 100 | 166 | 1.62 | 143 |

Examples 4-8 demonstrate that furan-based polyamides can be formed starting from three monomers or four monomers in any combination such as two diacids and a diamine as in Examples 4-6, or one diacid and two diamines as in Example 7, or two diacids and two diamines as in Example 8 using an interfacial copolymerization. Furthermore, the resulting composition of the polyamide can be tuned by changing the monomer feedstock through using different amounts of the diacids and diamines. Furthermore, as shown in Table 5, one can tune properties of the resulting furan-based polyamide (Example 4-8) between those of the polyamide (Example 9-10), such as the glass transition temperature (Tg) by varying composition in terms of monomer type and relative amount of the monomers, thus attaining properties purposefully different than those of the polyamides demonstrated in Examples 1, 9, and 10. Such polyamides are likely to demonstrate beneficial performance in structures comprising monolayers, coatings, laminates, multilayers, and/or blends where differentiated material properties are desired compared to FDCA-based polyamide homopolymers and/or other polyamides. The polyamides of Examples 4-8 can be used as to prepare monolayer films, using procedure similar to Example 1C. Furthermore, monolayer or multilayer structures can be formed using compositions comprising blends of furan-based polyamides with other polyamides, such as nylon or other furan-based polyamides, such as Example 1, 9-10, using procedure as outlined in Example 2 and 3 respectively.

The following numbered clauses, describing aspects of the proposals, are part of the description:
Clause 1. A multilayer structure comprising:
   a) a first layer selected from the group consisting of polymers, composites, metals, alloys, glass, silicon, ceramics, wood, and paper; and
   b) a furan-based polyamide layer disposed on at least a portion of the first layer, wherein the furan-based polyamide is derived from:
      i. one or more dicarboxylic acids or derivatives thereof selected from the group consisting of an aliphatic diacid, an aromatic diacid and an alkylaromatic diacid, wherein at least one of the dicarboxylic acid is furan dicarboxylic acid or a derivative thereof, and
      ii.one or more diamines s selected from the group consisting an aliphatic diamine, an aromatic diamine and an alkylaromatic diamine, and
   wherein the furan-based polyamide layer provides a substantial barrier to gas permeation.
Clause 2. The multilayer structure of clause 2, wherein the first layer is selected from the group consisting of polyurethane, polyester, polyolefin, polyamide, polyimide, polycarbonate, polyether, polyacrylates, styrenics, fluoropolymer, polyvinylchlorides, epoxies, EVOH and polysiloxanes.
Clause 3. The multilayer structure of clause 1, wherein the furan-based polyamide comprises the following repeat unit: 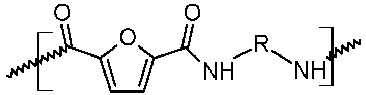 wherein R is selected from the group consisting of an aliphatic, an aromatic and an alkylaromatic group.
Clause 4. The multilayer structure of clause 3, wherein R is a C2-C18 hydrocarbon or fluorocarbon group.
Clause 5. The multilayer structure of clause 1, wherein the furan-based polyamide layer is a polymer blend of the furan-based polyamide and a polymer selected from the group consisting of polyurethanes, polyesters, polyolefins, polyamides, polyimides, polycarbonates, polyethers, polyacrylates, styrenics, fluoropolymers, polysiloxanes, EVOH, and mixtures thereof,
   wherein the furan-based polyamide is present in an amount in the range of 0.1-99.9% by weight, based on the total weight of the polymer blend.
Clause 6. The multilayer structure of clause 1, wherein the furan-based polyamide layer is a polymer blend comprising poly(trimethylene furandicarbonamide) (3AF) and a second furan-based polyamide different from 3AF, and
   wherein the amount of 3AF is 0.1-99.9% by weight, based on the total weight of the polymer blend.
Clause 7. The multilayer structure of clause 1 further comprising a second layer disposed on at least a portion of the furan-based polyamide layer, such that at least a portion of the furan-based polyamide layer is sandwiched between the first tie layer and the second layer.
Clause 8. The multilayer structure of clause 1, wherein the furan-based polyamide is a furan-based polyamide derived from:
   a) two or more diacids or derivatives thereof selected from the group consisting of an aliphatic diacid, an aromatic diacid and an alkylaromatic diacid,
      wherein the two or more diacids comprises at least 50.1 mol% of furan dicarboxylic acid or a derivative thereof, based on the total amount of the diacids or derivatives thereof; and
   b) one or more diamines selected from the group consisting of an aliphatic diamine, an aromatic diamine and an alkylaromatic diamine.
Clause 9. An article comprising the multilayer structure of clause 1, wherein the article is a film, a sheet, a coating, shaped or modeled article, a layer in a multilayer laminate, filaments, fibers, spun yarn, woven fabric, garment, or non-woven web, and wherein the multilayer structure provides gas permeation barrier to a product.
Clause 10. The article of clause 9, wherein the product is at least one of an oxygen-sensitive product, a moisture-sensitive product, or a carbonated beverage.
Clause 11. A gas impermeable structure comprising two or more layers, wherein at least one of the layers is a gas permeation barrier layer comprising a furan-based polyamide comprises the following repeat unit: 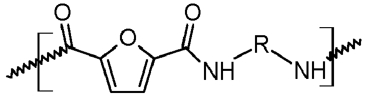 wherein R is selected from the group consisting of an aliphatic, an aromatic and an alkylaromatic group.
Clause 12. A method of improving a shelf-life of a product comprising:
   c) providing a gas-impermeable structure in a form of a housing provided with a port for introducing a product in an enclosure defined by the housing, wherein the gas-impermeable structure comprises one or more layers, wherein at least one of the layers comprises a furan-based polyamide, wherein the furan-based polyamide is derived from:
      i. one or more dicarboxylic acids or derivatives thereof selected from the group consisting of an aliphatic diacid, an aromatic diacid and an alkylaromatic diacid, wherein at least one of the dicarboxylic acid is furan dicarboxylic acid or derivative thereof, and
      ii.one or more diamines selected from the group consisting an aliphatic diamine, an aromatic diamine and an alkylaromatic diamine; and
   d) storing the product in the enclosure defined by the housing of the gas-impermeable structure, wherein the gas permeation barrier layer prevents permeation of gases thereby improving the shelf life of the product.
Clause 13. A polymer blend composition comprising a polymer blend of a furan-based polyamide and a polymer selected from the group consisting of polyurethanes, polyesters, polyolefins, polyamides, polyimides, polycarbonates, polyethers, polyacrylates, styrenics, fluoropolymers, polysiloxanes, EVOH, and mixtures thereof,
   wherein the furan-based polyamide is derived from:
      i. one or more dicarboxylic acids or derivatives thereof selected from the group consisting of an aliphatic diacid, an aromatic diacid and an alkylaromatic diacid, wherein at least one of the dicarboxylic acid or derivative thereof is furan dicarboxylic acid or derivative thereof, and
      ii. one or more diamines selected from the group consisting of an aliphatic diamine, a cycloaliphatic diamine, an aromatic diamine, an arylaliphatic diamine and an alkylaromatic diamine,
   wherein the furan-based polyamide is present in an amount in the range of 0.1-99.9% by weight, based on the total weight of the polymer blend.
Clause 14. The polymer blend composition of clause 13, comprising the polymer blend of a furan-based polyamide and a second polyamide selected from the group consisting of nylon-6, nylon-11, nylon-12, nylon 6-6, nylon 6-10, nylon 6-11, nylon 6-12, nylon 6/66 copolymer, nylon 6/12/66 terpolymer, poly(para-phenylene terephthalamide), poly(*meta*-phenylene terephthalamide), poly(*meta*-xylene adipamide) (MXD6), and mixtures thereof,
   wherein the furan-based polyamide is present in an amount in the range of 0.1-99.9% by weight, based on the total weight of the polymer blend.
Clause 15. The polymer blend composition of clause 13, comprising the polymer blend comprises poly(trimethylene furandicarbonamide) (3AF) and a second furan-based polyamide different from 3AFand
   wherein the amount of 3AF is 0.1-99.9% by weight, based on the total weight of the polymer blend.

## Claims

1. A polymer blend composition comprising a polymer blend of a furan-based polyamide and a polymer selected from the group consisting of polyurethanes, polyesters, polyolefins, polyamides, polyimides, polycarbonates, polyethers, polyacrylates, styrenics, fluoropolymers, polysiloxanes, EVOH, and mixtures thereof,
wherein the furan-based polyamide is derived from:
i. one or more dicarboxylic acids or derivatives thereof selected from the group consisting of an aliphatic diacid, an aromatic diacid and an alkylaromatic diacid, wherein at least one of the dicarboxylic acid or derivative thereof is furan dicarboxylic acid or derivative thereof, and
ii. one or more diamines selected from the group consisting of an aliphatic diamine, a cycloaliphatic diamine, an aromatic diamine, an arylaliphatic diamine and an alkylaromatic diamine,
wherein the furan-based polyamide is present in an amount in the range of 0.1-99.9% by weight, based on the total weight of the polymer blend.

2. The polymer blend composition of claim 1, wherein the furan-based polyamide is present in an amount in the range 0.5-80% by weight, based on the total weight of the polymer blend.

3. The polymer blend composition of claim 1, wherein the furan-based polyamide is present in an amount in the range of 1-50% by weight, based on the total weight of the polymer blend.

4. The polymer blend composition of claim 1, wherein the total content of bio-derived diacid in the furan-based polyamide is in the range 10-95% by moles with respect to the total molar content of the diacids and their esters in said polyamide.

5. The polymer blend composition of any of the preceding claims, where the one or more diamines comprises a C2 to C12 aliphatic diamine.

6. The polymer blend composition of claim 5, wherein the one or more diamines is trimethylenediamine; 1,2-ethylenediamine; 1,4-tetramethylenediamine; 1,5-pentamethylenediamine; 2-methyl pentamethylenediamine; or 1,6-hexamethylenediamine.

7. The polymer blend composition of claim 5, wherein the one or more diamines is 1,3 propane diamine or hexamethylene diamine.

8. The polymer blend composition of claim 1, comprising the polymer blend of a furan-based polyamide and a second polyamide selected from the group consisting of nylon-6, nylon-11, nylon-12, nylon 6-6, nylon 6-10, nylon 6-11, nylon 6-12, nylon 6/66 copolymer, nylon 6/12/66 terpolymer, poly(para-phenylene terephthalamide), poly(*meta*-phenylene terephthalamide), poly(*meta*-xylene adipamide) (MXD6), and mixtures thereof,
wherein the furan-based polyamide is present in an amount in the range of 0.1-99.9% by weight, based on the total weight of the polymer blend.

9. The polymer blend composition of claim 1, comprising the polymer blend comprises poly(trimethylene furandicarbonamide) (3AF) and a second furan-based polyamide different from 3AF and
wherein the amount of 3AF is 0.1-99.9% by weight, based on the total weight of the polymer blend,
wherein the second furan-based polyamide is preferably according to the formula: 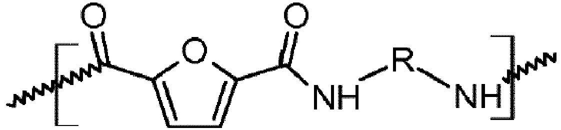
wherein R is selected form the group consisting of an aliphatic, an aromatic and an alkylaromatic group.

10. The polymer blend composition of any one of claims 1 to 4, wherein the furan-based polyamide is derived from two or more diacids comprising furan dicarboxylic acid and one or more diamines and comprises the following repeat units (1) and (2): 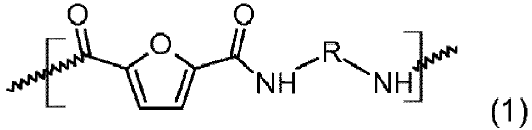 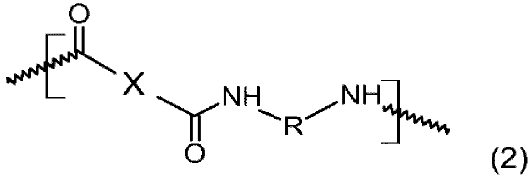 wherein X and R are independent selected from an alkyl, an aromatic or an alkylaromatic group.

11. The polymer blend composition of claim 10, wherein the repeat unit (1) is present in the range of 50.1-99.9 mol% and the repeat unit (2) is present in the range 0.1-49.9%, based on the total amount of furan-based polyamide composition.

12. The polymer blend composition of any one of claims 1 to 4, wherein the furan-based polyamide is derived from:
a) 50.1-99.9 mol% of furan dicarboxylic acid, based on the total amount of the diacid;
b) 0.1-49.9 mol% of terephthalic acid, based on the total amount of the diacid; and
c) one or more diamines selected from the group consisting of an aliphatic diamine, an aromatic diamine, and an alkylaromatic diamine.

13. The polymer blend composition of any one of claims 1 to 4, wherein the furan-based polyamide is derived from furandicarboxylic acid, terephthalic acid and one or more diamines, and comprises the following repeat units (1) and (3): 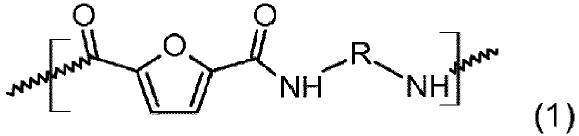 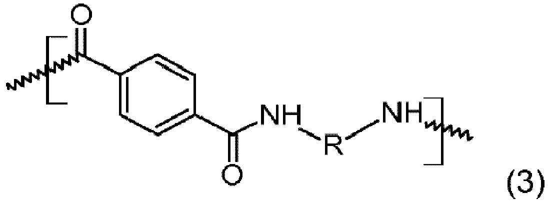 wherein R are independently selected from the group consisting of an aliphatic, an aromatic, and an alkylaromatic group.

14. The polymer blend composition of any one of claims 1 to 4, wherein the furan-based polyamide further comprises at least one multifunctional acid or its derivative selected from the group consisting of triacids, tetracids, and pentacids, and wherein the polyamide comprises at least 50.1 mol% of furan dicarboxylic acid or a derivative thereof based on the total amoun to fhte dicarboxylic acid and the multifunctional acid or their derivatives.

15. Use of a polymer blend composition according to any one of claims 1 to 14 as a barrier to gas permeation.
